# EUROPÄISCHE PATENTSCHRIFT

(11) **EP 3 321 160 B1**
(45) Veröffentlichungstag und Bekanntmachung des Hinweises auf die Patenterteilung: **20.11.2019**
(21) Anmeldenummer: 17202805.2
(22) Anmeldetag: 18.08.2015
(51) Int. Cl.: B62L 3/02, B62K 23/06

(54) **HANDBETÄTIGTE GEBEREINHEIT**
MANUALLY OPERATED TRANSMITTER UNIT
ÉMETTEUR MANUEL

(30) Priorität: 20.08.2014 DE 102014111917
(43) Veröffentlichungstag der Anmeldung: 16.05.2018
(62) Teilanmeldung aus: 15181390.4
(73) Patentinhaber: Gustav Magenwirth GmbH & Co. KG, 72574 Bad Urach (DE)
(72) Erfinder: Hujer, Joachim, 72582 Grabenstetten (DE); Neutsch, Christian, 72764 Reutlingen (DE); Penazzi, Richard, 72663 Großbettlingen (DE)
(74) Vertreter: Hoeger, Stellrecht & Partner Patentanwälte mbB

(56) Entgegenhaltungen:
- DE-A1-102009 039 620

## Beschreibung

Die Erfindung betrifft eine handbetätigte Gebereinheit für Fahrzeuge, insbesondere für lenkergeführte Fahrzeuge, umfassend ein Gehäuse, einen relativ zum Gehäuse bewegbaren Betätigungshebel, welcher derart mit einem Übertragungselement gekoppelt ist, dass eine Betätigung des Betätigungshebels mittels des Übertragungselements auf eine Nehmereinheit übertragen wird.

Derartige handbetätigte Gebereinheiten sind aus dem Stand der Technik bekannt, beispielsweise aus der DE 10 2009 039 620 A1.

Bei diesen Gebereinheiten besteht die Forderung, ergänzend zu der Betätigung der Nehmereinheit weitere Fahrzeugfunktionen zu steuern.

Der Erfindung liegt daher die Aufgabe zugrunde, eine Gebereinheit der eingangs beschriebenen Art derart zu verbessern, dass weitere Funktionen eines Fahrzeugs gesteuert werden können.

Diese Aufgabe wird erfindungsgemäß durch eine Gebereinheit gemäß Anspruch 1 gelöst.

Der Vorteil der erfindungsgemäßen Lösung ist darin zu sehen, dass durch den Detektor eine von der Einwirkung auf das Übertragungselement und der Einwirkung auf die Nehmereinheit unabhängige Möglichkeit geschaffen wurde, den unbetätigten und/oder betätigten Zustand des Betätigungshebels zu erfassen.

Insbesondere lassen sich mit einer derartigen Detektoreinheit dann auch in einfacher Weise elektronische Funktionseinheiten durch eine Betätigung des Betätigungshebels steuern.

Besonders vorteilhaft ist es, wenn die Detektoreinheit einen Detektorausgang aufweist, an welchem für eine externe Funktionseinheit ein elektrisch erfassbares Zustandssignal zur Abfrage zur Verfügung steht.

Damit besteht mit der erfindungsgemäßen Gebereinheit die Möglichkeit, zusätzlich zu der Übertragung der Betätigung des Betätigungshebels mittels des Übertragungselements noch elektrische Steuereinheiten anzusteuern.

Derartige Funktionseinheiten können beispielsweise Antriebsabschaltungen oder Rekuperatorschaltungen oder andere Schaltungen sein, die insbesondere dann, wenn die Gebereinheit zum Betätigen einer Bremse als Nehmereinheit eingesetzt wird, aktiviert werden, um die Bremswirkung zu unterstützen.

Das elektrisch erfassbare Zustandssignal könnte zum Beispiel ein Widerstandswert sein.

Besonders einfach lässt sich das Zustandssignal für eine elektrische Steuereinheit dann verwerten, wenn die Detektoreinheit den jeweils erfassten Zustand des Betätigungshebels in einen das Zustandssignal bildenden elektrischen Schaltzustand umsetzt.

Ein derartiger elektrischer Schaltzustand ist entweder ein Einschalt- oder ein Ausschaltzustand.

Aus diesem Grund ist beispielsweise vorgesehen, dass der elektrische Schaltzustand einem geöffneten Schalter entspricht.

Alternativ oder ergänzend dazu ist es aber auch denkbar, dass der elektrische Schaltzustand einem geschlossenen Schalter entspricht.

Hinsichtlich der Einwirkung auf den Detektor ist vorzugsweise vorgesehen, dass der Betätigungshebel auf den mindestens einen Detektor mindestens in einem der beiden Betätigungszustände, das heißt im unbetätigten Zustand und/oder in betätigtem Zustand einwirkt.

Dabei kann die Einwirkung unmittelbar auf den Detektor erfolgen.

Eine andere vorteilhafte Lösung sieht aber auch vor, dass der Betätigungshebel über ein Übertragungselement auf den mindestens einen Detektor einwirkt.

Im Rahmen der erfindungsgemäßen Lösung ist es grundsätzlich möglich, mit einem einzigen Detektor zu arbeiten.

Vorteilhaft ist es jedoch, wenn mehrere Detektoren eingesetzt sind.

Eine günstige Lösung sieht dabei vor, dass die Detektoreinheit mindestens zwei Detektoren umfasst.

Insbesondere im Falle der Verwendung zweier Detektoren sieht eine besonders günstige Lösung vor, dass die Detektoreinheit eine eine Einwirkung auf die Detektoren übertragende Wippe umfasst, welche wechselweise auf jeweils einen der Detektoren einwirkt.

Eine derartige Wippe hat dabei durch ihre wechselweise Einwirkung auf die Detektoren den Vorteil, dass damit eine Einwirkung auf entweder den einen der beiden Detektoren oder den anderen der beiden Detektoren erfolgt.

Dies ist insbesondere in den Fällen günstig, in welchen die Zustandssignale der Detektoren redundant ausgewertet werden, das heißt beide Zustandssignale beider Detektoren ausgewertet werden, wobei bei Einsatz einer derartigen Wippe die Auswertung stets davon ausgehen kann, dass einer der Detektoren das betätigte Zustandssignal und der andere der Detektoren das unbetätigte Zustandssignal abgeben muss, unabhängig davon, wie die Einwirkung auf die Wippe erfolgt.

Hinsichtlich der Ausbildung der Detektoren wurden im Zusammenhang mit der bisherigen Erläuterung der erfindungsgemäßen Lösung keine näheren Angaben gemacht.

So sieht eine besonders vorteilhafte Lösung vor, dass der mindestens eine Detektor ein taktiler Detektor ist, da mit einem taktilen Detektor in einfacher Weise eine Einwirkung erfasst werden kann, wobei ein taktiler Detektor noch den großen Vorteil hat, dass dieser insbesondere im Fahrzeugbereich sehr robust und zuverlässig arbeitet.

Eine besonders günstige Lösung sieht vor, dass der mindestens eine Detektor als ein taktil betätigbarer elektrischer Schaltkontakt ausgebildet ist.

Im Zusammenhang mit der bisherigen Erläuterung der einzelnen Ausführungsformen der Erfindung wurde nicht näher darauf eingegangen wie die Anordnung des mindestens einen Detektors an der Gebereinheit erfolgt.

So sieht eine besonders vorteilhafte Lösung vor, dass der mindestens eine Detektor so an dem Gehäuse der Gebereinheit angeordnet ist, dass auf diesen der Betätigungshebel in der betätigten oder unbetätigten Stellung einwirkt.

Dabei kann grundsätzlich der mindestens eine Detektor direkt an dem Gehäuse angeordnet sein.

Durch die Zuordnung des Detektors zu der Griffweitenverstelleinrichtung besteht die Möglichkeit, dass selbst unterschiedliche Einstellungen der Griffweite durch die Griffweitenverstelleinrichtung die Betätigung des Detektors seitens des Betätigungshebels nicht beeinflussen, sondern dass der Detektor bei unterschiedlich eingestellten Griffweiten stets in gleicher Weise durch den Betätigungshebel betätigt wird.

Besonders günstig ist es dabei, wenn der mindestens eine Detektor einem Einstellelement der Griffweitenverstelleinrichtung zugeordnet ist, insbesondere an dem Einstellelement angeordnet ist, so dass dadurch ein Einstellen der Griffweite durch das Einstellelement die Betätigung des Detektors nicht beeinflusst, da der Detektor stets mit dem Einstellelement mitbewegt wird. Vorzugsweise ist dabei der mindestens eine Detektor so angeordnet, dass auf diesen ein Anschlagarm des Betätigungshebels einwirkt.

Besonders günstig ist es dabei, wenn der Anschlagarm in jeder Stellung des Einstellelements in seiner jeweiligen Ausgangsstellung auf den mindestens einen Detektor einwirkt, insbesondere mittelbar oder unmittelbar einwirkt. Alternativ oder ergänzend zum Anordnen des mindestens einen Detektors an dem Gehäuse der Gebereinheit sieht eine andere vorteilhafte Lösung vor, dass der mindestens eine Detektor an dem Betätigungshebel angeordnet ist.

In diesem Fall ist vorzugsweise vorgesehen, dass der Betätigungshebel einen ersten Hebelarm und einen zweiten Hebelarm umfasst und dass die Hebelarme relativ zueinander zwischen einer in einem unbetätigten Zustand des Betätigungshebels vorliegenden Betätigungsausgangsstellung und einer in einem betätigten Zustand vorliegenden Betätigungsstellung bewegbar sind.

Das heißt, dass bei dieser Lösung die Relativbewegung der Hebelarme dazu eingesetzt wird, auf den mindestens einen Detektor einzuwirken.

Grundsätzlich könnten dabei die Hebelarme relativ zueinander die unterschiedlichsten Bewegungen ausführen.

Eine besonders einfache Lösung sieht jedoch vor, dass die Hebelarme zwischen der Betätigungsausgangsstellung und der Betätigungsstellung relativ zueinander verschwenkbar sind.

Alternativ zum Vorsehen der Verschwenkbarkeit der Hebelarme zueinander sieht eine weitere vorteilhafte Lösung vor, dass die Hebelarme durch elastische Bereiche miteinander und relativ zueinander bewegbar verbunden sind.

Das heißt, dass in diesem Fall die Hebelarme ein zusammenhängendes Teil, vorzugsweise ein einstückiges Teil, darstellen, wobei der eine der Hebelarme relativ zum anderen der Hebelarme dadurch bewegbar ist, dass ein elastischer Bereich, beispielsweise ein querschnittsverringerter Verbindungsbereich zwischen diesen Hebelarmen vorgesehen ist.

Ein derartiger elastischer Bereich kann durch die verschiedenste Formgebung hergestellt sein.

Eine besonders günstige Lösung sieht vor, dass ein derartiger elastischer Bereich durch elastische Streben zwischen dem einen Hebelarm und dem anderen Hebelarm gebildet ist.

Um die Detektoreinheit zu betätigen, ist vorzugsweise vorgesehen, dass die Hebelarme einander zugewandt angeordnete Armabschnitte aufweisen und dass an einem Armabschnitt der mindestens eine Detektor angeordnet ist, auf welchen der andere der Armabschnitte in der Betätigungsausgangsstellung oder in der Betätigungsstellung einwirkt.

Eine zweckmäßige Lösung sieht dabei vor, dass der mindestens eine Detektor mit einem der Armabschnitte zusammenwirkend angeordnet ist und in den anderen der Armabschnitte eingreift, wobei beispielsweise letzterer auf den mindestens einen Detektor einwirkt.

Besonders günstig ist es, wenn der mindestens eine Detektor in einer Aufnahme des einen der Armabschnitte angeordnet ist und der andere der Armabschnitte die Aufnahme übergreift, so dass der Detektor geschützt durch die beiden Armabschnitte in dem Betätigungshebel angeordnet ist.

Um auch bei einem derartigen Betätigungshebel umfassend den ersten Hebelarm und den zweiten Hebelarm sicherzustellen, dass diese für die Detektoren in der unbetätigten Stellung eine definierte Position relativ zueinander einnehmen, ist vorzugsweise vorgesehen, dass der erste Hebelarm und der zweite Hebelarm durch ein federelastisches Element in Richtung der Betätigungsausgangsstellung relativ zueinander beaufschlagt sind, so dass die Hebelarme relativ zueinander in der Betätigungsausgangsstellung stets in einer definierten Stellung stehen.

Im Falle, dass die beiden Hebelarme durch einen elastischen Bereich miteinander verbunden sind, lässt sich dieser elastische Bereich vorzugsweise auch gleichzeitig dazu einsetzen, dass die Hebelarme im unbetätigten Zustand in der Betätigungsausgangsstellung relativ zueinander stehen und somit der eingesetzte Detektor in der nicht betätigten Stellung ist.

Bei einer Gebereinheit der vorstehend beschriebenen Ausführungsbeispiele ist insbesondere an dem Gehäuse eine Griffweitenverstelleinrichtung für den Betätigungshebel vorgesehen ist, mit welcher eine jeweilige Ausgangsstellung des Betätigungshebels vorgebbar ist.

Der Vorteil dieser Lösung ist dabei darin zu sehen, dass durch eine derartige Griffweitenverstellung der jeweilige Nutzer der handbetätigten Gebereinrichtung die für ihn günstige Ausgangsstellung, insbesondere eine für eine Hand des Nutzers günstige Ausgangsstellung, des Betätigungshebels relativ zum Lenker einstellen kann.

Vorzugsweise ist dabei eine derartige Griffweitenverstelleinrichtung so ausgebildet, dass diese ein relativ zu dem Gehäuse bewegbares Einstellelement umfasst, mit welchem die jeweilige Ausgangsstellung einstellbar ist.

Dabei kann das Einstellelement in unterschiedlichster Art und Weise bewegbar am Gehäuse angeordnet oder gelagert sein.

Beispielsweise wäre es denkbar, das Einstellelement drehbar am Gehäuse zu lagern, so dass durch Verdrehen des Einstellelements verschiedene Ausgangsstellungen des Betätigungshebels vorgebbar sind.

Eine konstruktiv und insbesondere hinsichtlich des Raumbedarfs vorteilhafte Lösung sieht vor, dass das Einstellelement an dem Gehäuse verschiebbar angeordnet ist.

Eine derartige verschiebbare Anordnung des Einstellelements relativ zum Gehäuse hat den Vorteil, dass bei dieser Anordnung der Raumbedarf für die Griffweitenverstelleinheit gering gehalten werden kann.

Eine besonders günstige Lösung sieht vor, dass das Einstellelement relativ zur Schwenkachse des Betätigungshebels in verschiedene einen unterschiedlichen Abstand von der Schwenkachse aufweisende Stellungen bringbar ist, welche die verschiedenen Ausgangsstellungen festlegen, die ihrerseits verschiedenen Griffweiten entsprechen.

Hinsichtlich der Ausbildung des Einstellelements selbst wurden bislang keine näheren Angaben gemacht.

Insbesondere wurden keine näheren Angaben zum Zusammenwirken des Einstellelements mit dem Betätigungshebel zur Einstellung der verschiedenen Ausgangsstellungen gemacht.

So sieht eine vorteilhafte Lösung vor, dass das Einstellelement mindestens eine Anschlagfläche für einen Anschlagarm des Betätigungshebels aufweist.

Dabei könnte die mindestens eine Anschlagfläche so ausgebildet sein, dass sie eine kontinuierlich variierende und insbesondere dadurch unterschiedliche Winkelabstände des Betätigungshebels von einer Halteeinheit vorgebende Fläche ist, auf welcher der Anschlagarm zur Einstellung der verschiedenen Ausgangsstellungen auf verschiedenen Flächenbereichen aufliegt.

Eine besonders vorteilhafte Ausführungsform sieht vor, dass das Einstellelement verschiedene Anschlagflächen aufweist, die insbesondere unterschiedliche Winkelabstände des Betätigungshebels von einer Halteeinheit vorgeben, und die verschiedenen Ausgangsstellungen des Betätigungshebels zugeordnet sind.

Beispielsweise können derartige verschiedene Anschlagflächen als relativ zueinander versetzte Flächen oder Flächenbereiche ausgebildet sein, mit denen der Anschlagarm in der jeweiligen Ausgangsstellung zusammenwirkt.

In diesem Fall ist zweckmäßigerweise vorgesehen, dass durch das Bewegen des Einstellelements jeweils eine der Anschlagflächen in eine mit dem Anschlagarm zusammenwirkende aktive Stellung bringbar ist, in welcher eine Festlegung der jeweiligen Ausgangsstellung des Betätigungshebels erfolgt.

Hinsichtlich der Festlegung der verschiedenen Stellungen des Einstellelements zum Erreichen der verschiedenen Ausgangsstellungen des Betätigungshebels wurden im Zusammenhang mit der bisherigen Erläuterung der einzelnen Ausführungsbeispiele keine näheren Angaben gemacht.

Beispielsweise wäre es denkbar, eine selbsthemmende Verstelleinrichtung vorzusehen.

Eine andere Möglichkeit wäre, das Einstellelement beispielsweise mit einer Schraube in verschiedenen Stellungen festzulegen.

Eine besonders günstige Lösung sieht vor, dass das Einstellelement der Griffweitenverstelleinrichtung durch eine Rasteinrichtung in den verschiedenen Stellungen festlegbar ist.

Der Vorteil dieser Lösung ist darin zu sehen, dass dadurch in besonders einfacher Weise eine werkzeuglose Griffweitenverstellung möglich ist, da die Rasteinrichtung so ausgelegt werden kann, dass sie werkzeuglos und somit lediglich manuell ein Erreichen der verschiedenen Stellungen zulässt.

Insbesondere ist dabei vorgesehen, dass die Rasteinrichtung zwei zusammenwirkende Rastelemente umfasst, von denen eines mit dem Gehäuse und ein anderes mit dem Einstellelement verbunden ist, so dass damit in einfacher Weise das Einstellelement relativ zu dem Gehäuse in den verschiedenen Stellungen festgelegt werden kann.

Die Rastelemente können dabei in unterschiedlichster Art und Weise ausgebildet sein.

Eine vorteilhafte Lösung sieht vor, dass ein erstes Rastelement einen Vorsprung aufweist und dass ein zweites Rastelement verschiedene Rastflächen zur Festlegung der verschiedenen Stellungen des Einstellelements aufweist.

Bei dieser Ausbildung der Rastelemente wirkt vorzugsweise der Vorsprung mit jeweils einer der Rastflächen zur Festlegung der jeweiligen Stellung zusammen und zum Erreichen verschiedener Stellungen wird der Vorsprung zu den verschiedenen Rastflächen bewegt.

Hinsichtlich der Ausführung der Rastbewegung wurden im Zusammenhang mit der Ausbildung der Rastelemente keine näheren Angaben gemacht.

So ist zweckmäßigerweise vorgesehen, dass eines der Rastelemente eine federnde Zunge umfasst, welche es ermöglicht, die Rastelemente relativ zueinander von einer Raststellung in die andere Raststellung zu bewegen.

Vorzugsweise sind bei der erfindungsgemäßen Lösung das zweite Rastelement mit dem Einstellelement verbunden und das erste Rastelement mit dem Gehäuse.

Ferner ist zweckmäßigerweise vorgesehen, dass das zweite Rastelement die federnde Zunge umfasst, welche die mehreren Rastflächen trägt.

Ferner wurden im Zusammenhang mit der bisherigen Lösung auch noch keine näheren Angaben über die Anordnung des Einstellelements am Gehäuse gemacht.

So sieht eine vorteilhafte Lösung vor, dass das Einstellelement durch eine Führung an dem Gehäuse geführt ist und damit in einer Führungsrichtung relativ zu dem Gehäuse definiert bewegbar ist.

Beispielsweise ist die Führung so ausgebildet, dass sie einerseits Führungskörper und andererseits Führungsnuten umfasst, wobei durch die Führungsnuten die Führungsrichtung vorgegeben ist.

Beispielsweise ist vorgesehen, dass das Einstellelement die Führungskörper und dass die Führungsnuten an dem Gehäuse angeordnet sind.

Hinsichtlich der Führungsrichtung für die Bewegbarkeit des Einstellelements wurden bislang keine näheren Angaben gemacht.

So sieht eine besonders kompakt bauende Lösung vor, dass das Einstellelement durch die Führung in einer Führungsrichtung ungefähr parallel zu dem Geberzylinder bewegbar ist, so dass dabei das Gehäuse klein und kompakt ausgeführt werden kann.

Unter ungefähr parallel ist dabei zu verstehen, dass die Abweichung der Führungsrichtung von einem parallelen Verlauf 20° oder weniger beträgt.

Im Zusammenhang mit den bislang beschriebenen Ausführungsbeispielen wurden keine Ausführungen darüber gemacht, wie der Betätigungshebel in der jeweiligen Ausgangsstellung gehalten werden soll.

Besonders vorteilhaft ist es dabei, wenn der Betätigungshebel in Richtung der jeweiligen Ausgangsstellung federbeaufschlagt ist und dadurch im unbetätigten Zustand in dieser gehalten ist, das heißt, dass der Betätigungshebel im unbetätigten Zustand stets selbsttätig in die Ausgangsstellung übergeht.

Hierzu kann eine separate Federeinheit vorgesehen sein, die den Betätigungshebel selbsttätig jeweils in die Ausgangsstellung bewegt.

Eine besonders vorteilhafte Lösung sieht jedoch vor, dass der Betätigungshebel durch den Geberzylinder in Richtung der Ausgangsstellung beaufschlagt ist und somit der Geberzylinder selbst so auf den Betätigungshebel einwirkt, dass dieser jeweils die Ausgangsstellung einnimmt.

Diese Lösung hat darüber hinaus noch den Vorteil, dass dadurch die jeweilige Ausgangsstellung des Betätigungshebels gleichzeitig eine Ausgangsstellung für den Geberzylinder darstellt.

Somit ist der Ausgangsstellung des Betätigungshebels stets eine entsprechende Ausgangsstellung des Geberzylinders zugeordnet.

Diese Ausgangsstellung des Geberzylinders kann dabei jedoch ebenfalls durch die Verstellbarkeit des Stößels eingestellt werden.

Insbesondere lässt sich eine derartige Einwirkung des Geberzylinders auf den Betätigungshebel dadurch realisieren, dass der Geberzylinder mit einem federelastischen Element versehen ist, welches den Geberzylinder stets in seine den Betätigungshebel in die Ausgangsstellung führende Richtung beaufschlagt.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine Draufsicht auf eine an einem Lenkerabschnitt montierte Gebereinheit gemäß einem ersten Ausführungsbeispiel;
- Fig. 2: einen Längsschnitt durch die Gebereinheit in Fig. 1 in einer zur Zeichenebene in Fig. 1 parallelen Schnittebene;
- Fig. 3: eine perspektivische Ansicht eines Druckarms des Betätigungshebels in Richtung des Pfeils A in Fig. 1;
- Fig. 4: einen vergrößerten Längsschnitt durch den Betätigungshebel im Bereich des Druckarms jedoch ohne Stößel;
- Fig. 5: einen Schnitt ähnlich Fig. 4 mit Stößel;
- Fig. 6: einen Schnitt längs Linie 6-6 in Fig. 5;
- Fig. 7: einen vergrößerten Längsschnitt ähnlich Fig. 2 durch ein Gehäuse der Gebereinheit mitsamt einem Teil des Betätigungshebels und einem an diesem vorgesehenen Stößel und einer Griffweitenverstelleinrichtung in einer Stellung entsprechend einer maximalen Griffweite;
- Fig. 8: einen Schnitt gemäß Fig. 7 bei einer Stellung der Griffweitenverstelleinrichtung in einer einer geringeren Griffweite entsprechenden Stellung;
- Fig. 9: eine Darstellung gemäß Fig. 7 mit der Griffweiteneinstelleinrichtung in einer einer minimalen Griffweite entsprechenden Stellung;
- Fig. 10: einen Schnitt ähnlich Fig. 2 in einer Stellung der Griffweitenverstelleinrichtung entsprechend einer mittleren Stellung gemäß Fig. 8;
- Fig. 11: einen Schnitt ähnlich Fig. 2 bei Stellung der Griffweitenverstelleinrichtung mit minimaler Griffweite entsprechend Fig. 9;
- Fig. 12: eine vergrößerte ausschnittsweise Darstellung der Griffweitenverstelleinrichtung entsprechend der Stellung bei maximaler Griffweite gemäß Fig. 7;
- Fig. 13: eine vergrößerte Darstellung der Griffweitenverstelleinrichtung in einer Stellung entsprechend der mittleren Griffweite gemäß Fig. 8;
- Fig. 14: eine vergrößerte Darstellung der Griffweitenverstelleinrichtung in einer Stellung entsprechend der minimalen Griffweite entsprechend Fig. 9;
- Fig. 15: eine perspektivische Darstellung eines Einstellelements der Griffweitenverstelleinrichtung;
- Fig. 16: einen Schnitt längs Linie 16-16 in Fig. 2;
- Fig. 17: eine Darstellung ähnlich Fig. 12 bei betätigtem Betätigungshebel;
- Fig. 18: eine Explosionsdarstellung eines Betätigungshebels einer Gebereinheit gemäß einem zweiten Ausführungsbeispiel;
- Fig. 19: einen Längsschnitt durch den Betätigungshebel der Gebereinheit gemäß dem zweiten Ausführungsbeispiel;
- Fig. 20: eine perspektivische Darstellung eines Betätigungshebels einer Gebereinheit gemäß einem dritten Ausführungsbeispiel;
- Fig. 21: einen Längsschnitt durch den Betätigungshebel der Gebereinheit gemäß dem dritten Ausführungsbeispiel;
- Fig. 22: einen Schnitt längs Linie 22-22 in Fig. 21 und
- Fig. 23: einen Schnitt längs Linie 23-23 in Fig. 21.

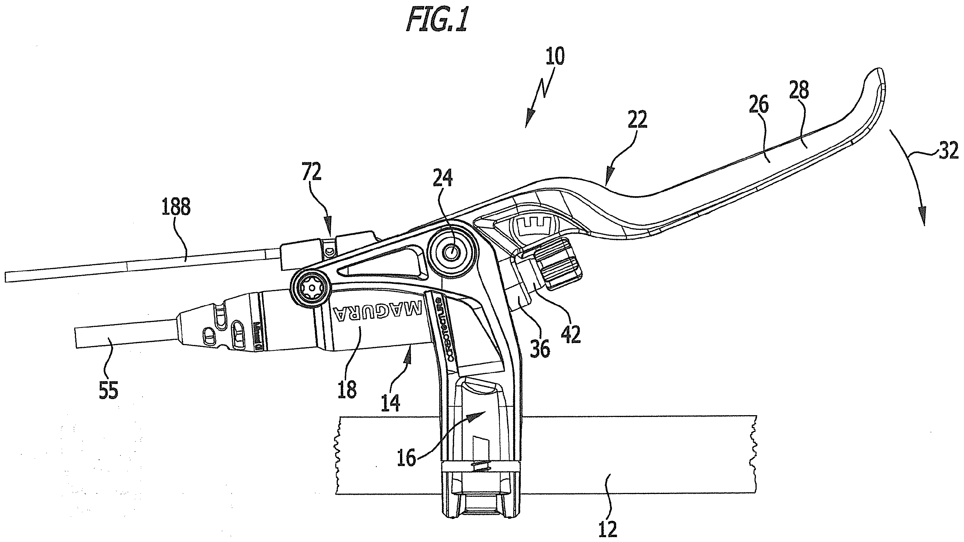

Ein in Fig. 1 dargestelltes Ausführungsbeispiel einer erfindungsgemäßen Gebereinheit 10 für Fahrzeuge, insbesondere für lenkergeführte Fahrzeuge, umfasst ein einem Lenker 12 des Fahrzeugs montierbares Gehäuse 14, welches eine an dem Lenker 12 klemmend fixierbare Halteeinheit 16 aufweist.

Ferner umfasst das Gehäuse 14 einen Gehäusekörper 18, an welchem ein Betätigungshebel 22 um eine Schwenkachse 24 schwenkbar gelagert ist, wobei der Betätigungshebel 22 einen manuell betätigbaren Griffarm 26 mit einer Grifffläche 28 zur manuellen Betätigung des Betätigungshebels 22 aufweist, wobei eine manuelle Beaufschlagung der Grifffläche 28 zu einem Verschwenken des Betätigungshebels 22 um die Schwenkachse 24 ausgehend von einer Ausgangsstellung in einer Betätigungsrichtung 32 führt.

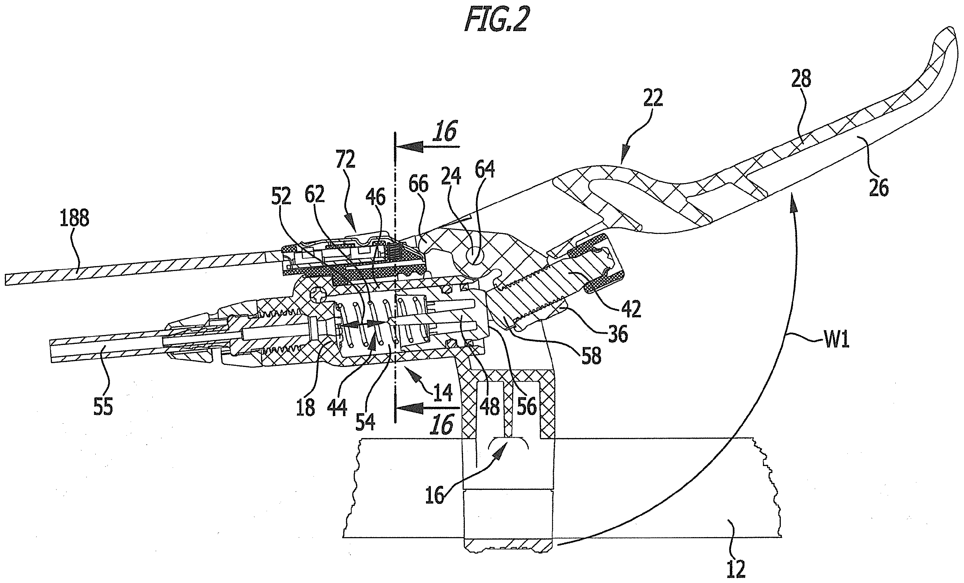

Wie in Fig. 1 und 2 dargestellt, umfasst der Betätigungshebel 22 neben dem Griffarm 26 noch einen Druckarm 36, an welchem ein als Ganzes mit 42 bezeichneter Stößel gelagert ist.

Mit dem Stößel 42 ist ein Geberzylinder 44 beaufschlagbar, welcher in dem Gehäusekörper 18 angeordnet ist.

Der Geberzylinder 44 wird vorzugsweise gebildet, durch ein in dem Gehäusekörper 18 angeordnetes, insbesondere einstückig in diesen ausgebildetes Zylindergehäuse 46, in welchem ein Kolben 48 in einer Bewegungsrichtung 52 bewegbar angeordnet ist, wobei das Zylindergehäuse 46 und der Kolben 48 eine Zylinderkammer 54 begrenzen, deren Volumen je nach Stellung des Kolbens 48 variiert, so dass im Falle eines in der Zylinderkammer 54 vorgesehenen Hydraulikmediums der Geberzylinder 44 als hydraulischer Geberzylinder arbeitet, mit welchem das Hydraulikmedium über eine Hydraulikleitung 55 einer Nehmereinheit, beispielsweise zur Betätigung einer Bremsvorrichtung, zuführbar ist.

Zum Bewegen des Kolbens 48 in der Bewegungsrichtung 52 ist dieser mit einer Druckfläche 56 versehen, auf welche der Stößel 42 seinerseits mit einem Stößelkopf 58 einwirkt.

Ferner ist der Kolben 48 durch eine in der Zylinderkammer 54 angeordnete Druckfeder 62 in Richtung einer ein maximales Volumen der Zylinderkammer 54 vorgebenden Endstellung beaufschlagt, welche daher den Kolben 48 stets im Sinne einer Vergrößerung der Zylinderkammer 54 verschiebt, so dass der Kolben mit der Druckfläche 56 vorzugsweise stets auf eine gerundete Stößelkopffläche 64 des Stößelkopfs 58 wirkt und den Betätigungshebel 22 stets soweit verschwenkt, bis ein Anschlagarm 66 an einer Griffweitenverstelleinrichtung 72 anliegt, die ebenfalls in dem Gehäuse 14 vorgesehen ist und die die Ausgangsstellung des Betätigungshebels 22 festlegt.

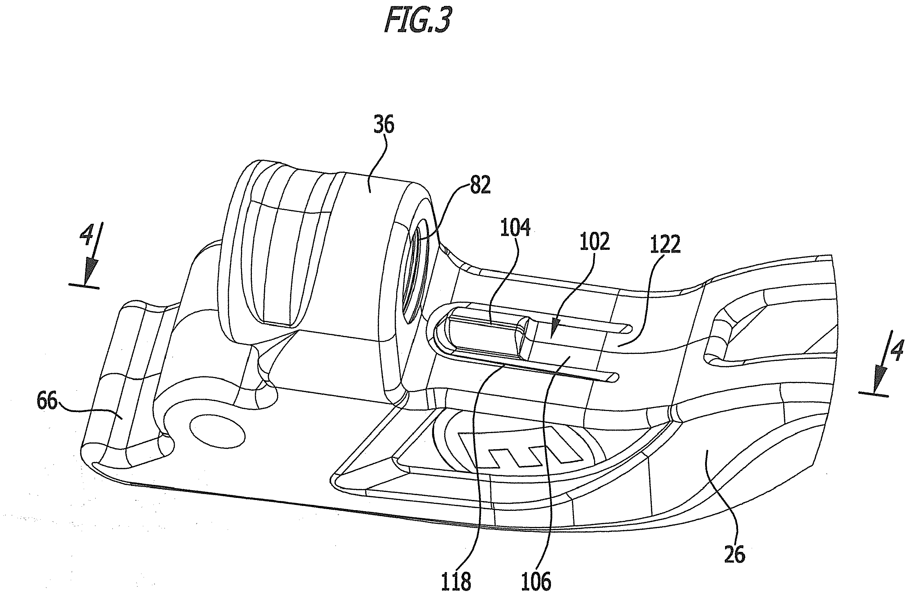

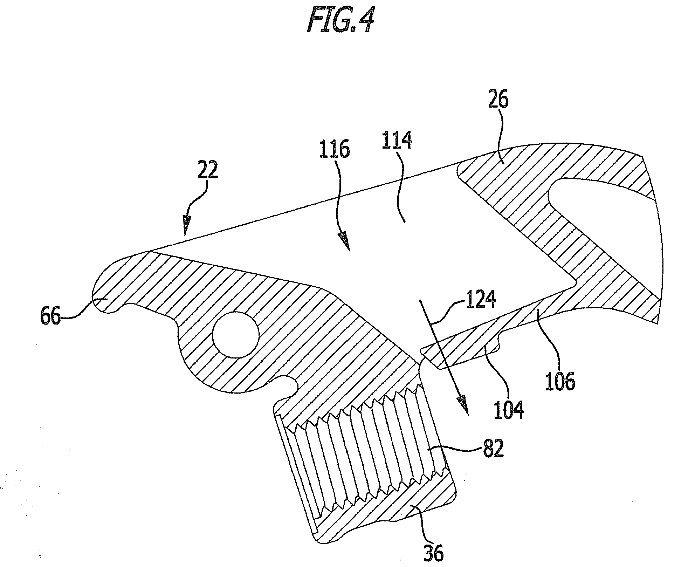

In den Fig. 3 bis 5 dargestellt, ist in dem Druckarm 36 selbst ein Innengewinde 82 vorgesehen, in welches ein Außengewinde 84 des Stößels 42 eingreift, so dass das Innengewinde 82 des Druckarms 36 und das Außengewinde 84 des Stößels 42 insgesamt eine Gewindeführung 86 bilden, durch welche der Stößel 42 in Richtung einer Längsachse 88 desselben, die gleichzeitig Mittelachse der Gewindeführung 86 ist, drehbar und verschiebbar ist, um den Abstand des Stößelkopfes 58 von dem Druckarm 36 einstellen zu können.

Zum Verdrehen des Stößels 42 ist dieser an seinem dem Stößelkopf 58 abgewandten Ende mit einem Drehbetätigungselement 92 versehen, welches drehfest auf einem dem Stößelkopf 58 gegenüberliegenden Endabschnitt 94 des Stößels 42 gehalten ist.

Somit liegen die Gewindeführung 86 und der Druckarm 36 zwischen dem Stößelkopf 58 und dem Drehbetätigungselement 92.

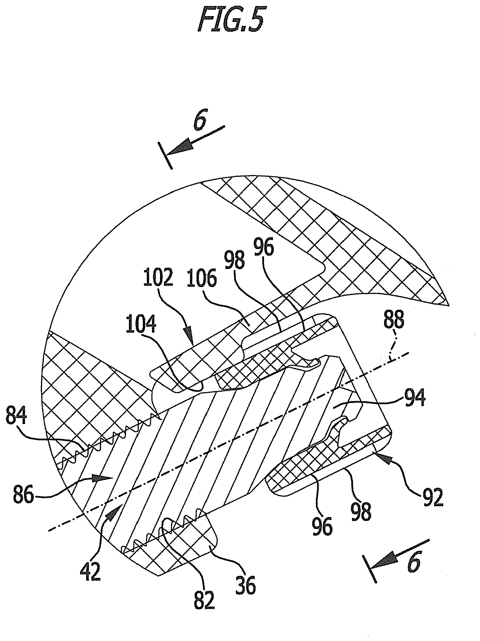

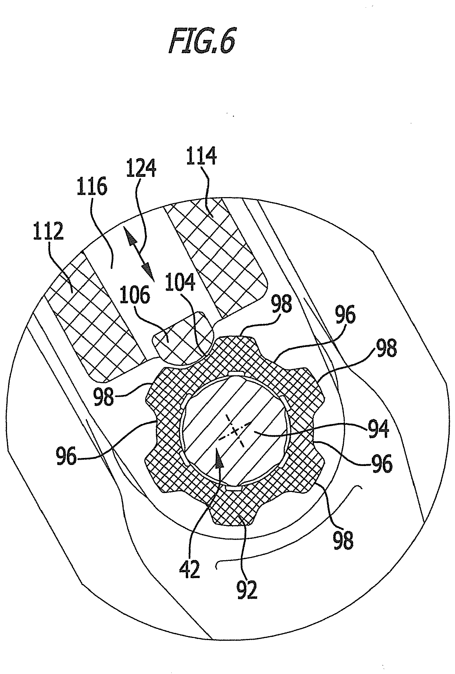

Das Drehbetätigungselement 92 ist dabei, wie in Fig. 5 und 6 dargestellt, umfangsseitig mit Griffmulden 96 versehen, die jeweils zwischen Erhebungen 98 des Drehbetätigungselements 92 liegen.

Durch die unmittelbare Anordnung des Innengewindes 82 der Gewindeführung 86 in dem Druckarm 36 ist auch die Ausrichtung der Längsachse 88 des Stößels 42 relativ zum Betätigungshebel 22 vorgegeben, so dass der Stößel 42 relativ zum Betätigungshebel 22 und insbesondere auch zum Griffarm 26 stets definiert ausgerichtet ist.

Aus diesem Grund ist vorzugsweise der Stößelkopf 58 mit der gerundeten Kopffläche 64 versehen, die auf die Druckfläche 56 des Kolbens 48 wirkt.

Um eine freie Drehbarkeit des Stößels 42 in der Gewindeführung 86 zu vermeiden, ist vorzugsweise ein Rastelement 102 vorgesehen, welches eine Rastnase 104 aufweist, die mit den Griffmulden 96 des Drehbetätigungselements 92 in Eingriff bringbar ist, um somit das Drehbetätigungselement 92 in einer Drehstellung festzulegen.

Die Rastnase 104 ist dabei vorzugsweise an einer elastisch bewegbar relativ zum Betätigungshebel 22, insbesondere zum Griffarm 26 des Betätigungshebels 22 bewegbaren Zunge 106 angeordnet.

Bei dem dargestellten Ausführungsbeispiel ist der Betätigungshebel 22 im Bereich des Griffarms 26 mit einer zwischen Seitenwangen 112 und 114 des Griffarms 26 liegenden Ausnehmung 116 versehen, die sich bis zu der Zunge 106 mit der Rastnase 104 erstreckt, wobei um die Zunge 106 und die Rastnase 104 ein sich U-förmig erstreckender Schlitz 118 vorgesehen ist der die Zunge 106 mit der Rastnase 104 freistellt, so dass folglich die Zunge 106 nur einseitig mit einer Zungenwurzel 122 (Fig. 3) mit dem Griffarm 26 verbunden ist und sich somit in einer Federrichtung 124 federnd in der Ausnehmung 116, insbesondere in diese hinein, bewegen kann.

Diese Konstruktion ermöglicht es, die Zunge 106 mit der Rastnase 104 als mit dem Griffarm 26 einstückiges Teil auszubilden, wenn der Betätigungshebel 22 mit dem Griffarm 26 beispielsweise als Kunststoffteil hergestellt ist.

Ist dagegen der Betätigungshebel 22 mit dem Griffarm 26 als Metallteil ausgebildet, so ist die Zunge 106 die Rastnase 104 tragende als federelastisches Element auszubilden und mit dem Betätigungshebel 22, insbesondere dem Griffarm 26, zu verbinden.

Durch das Verrasten des Drehbetätigungselements 92 in den verschiedenen Stellungen lässt sich somit eine einmal vorgegebene Einstellung des Stößels 42 mittels der Gewindeführung 86 und somit die durch den Stößel 42 vorgegebene Position des Kolbens 48 in der durch die Griffweitenverstelleinrichtung 72 vorgegebenen Ausgangsstellung des Betätigungshebels 22 aufrechterhalten, ohne dass eine selbsttätige Veränderung der Position des Stößels 42 erfolgt.

Damit lassen sich insbesondere Anpassungen des Geberzylinders 44 an nehmerseitige Veränderungen, beispielsweise Veränderungen von Bremsbelägen durch Verschleiß, vornehmen.

Wie bereits erwähnt, lässt sich bei der erfindungsgemäßen Gebereinheit 10 auch mittels der Griffweitenverstelleinrichtung 72 im Zusammenwirken mit dem Anschlagarm 66 die Ausgangsstellung des Betätigungshebels 22 und somit eine Griffweite, das heißt der Abstand des Griffarms 26 von dem Lenker 12 einstellen.

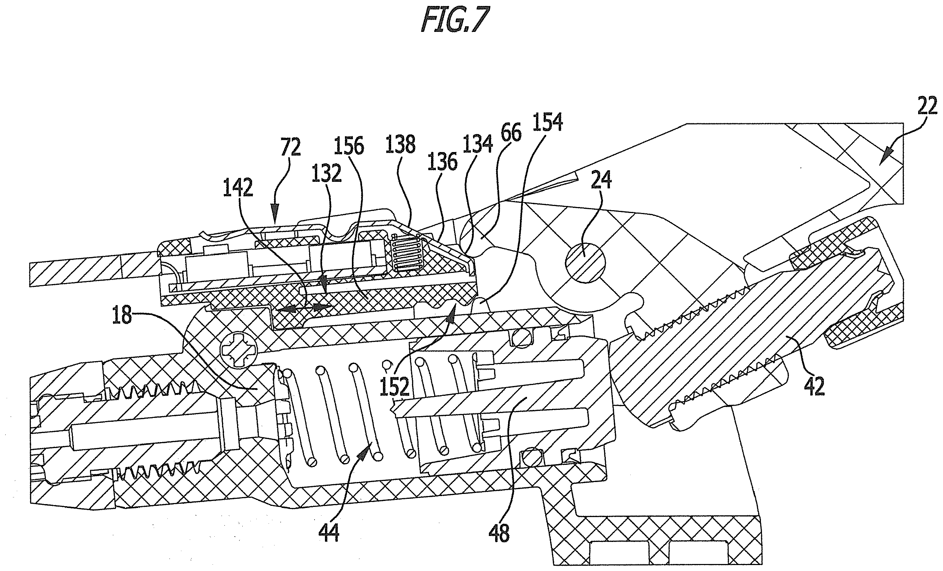

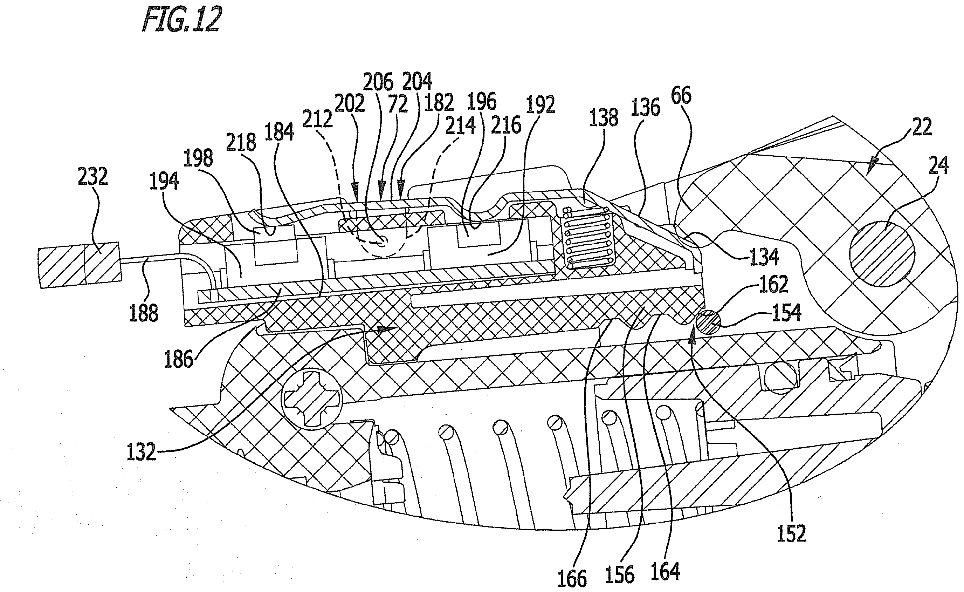

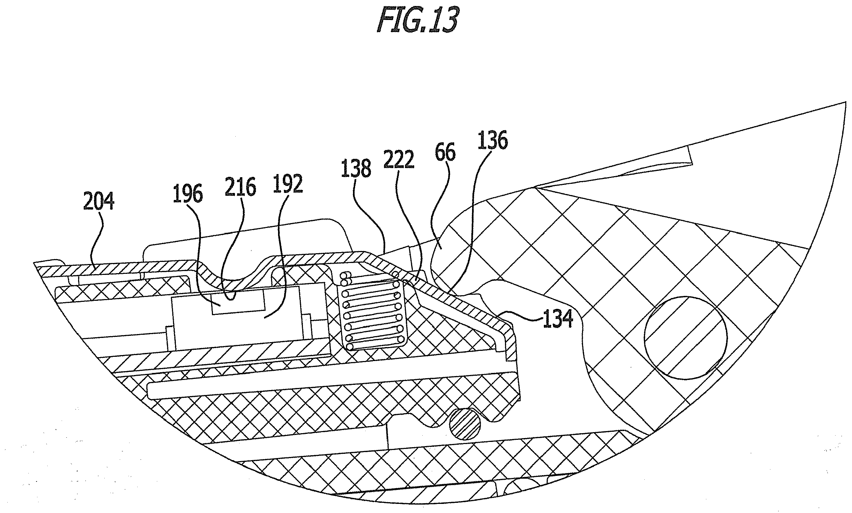

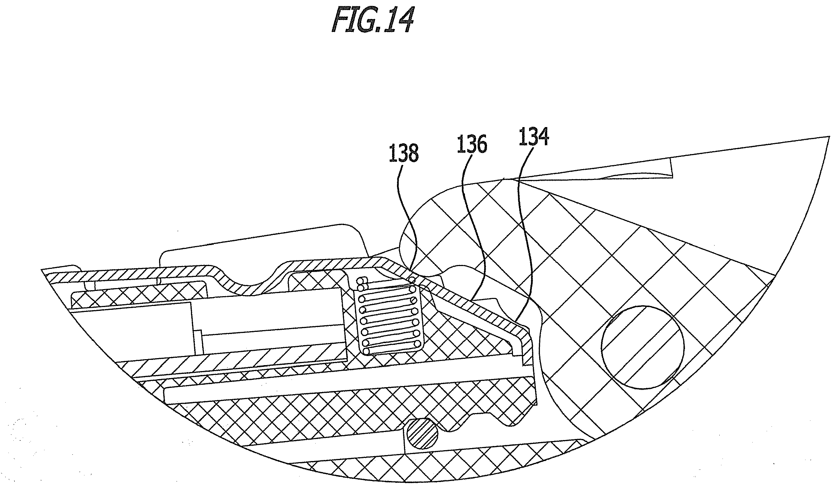

Hierzu ist, wie in den Fig. 7 bis 9 dargestellt, in dem Gehäusekörper 18 ein relativ zu diesem bewegbares Einstellelement 132 vorgesehen, welches, wie in den Fig. 12 bis 15 vergrößert dargestellt, insgesamt drei Anschlagflächen 134, 136 und 138 aufweist, die einzeln durch Bewegen des Einstellelements 132, beispielsweise durch lineares Verschieben desselben in einer Verschieberichtung 142 in eine aktive Stellung bringbar sind, in welcher sie ein Verschwenken des Betätigungshebels 22 entgegengesetzt zur Betätigungsrichtung 32 dadurch begrenzen, dass der Anschlagarm 66 an der jeweils in der aktiven Stellung stehenden Anschlagfläche 134, 136, 138 zur Anlage kommt, wobei dadurch eine Festlegung der jeweiligen Ausgangsstellung des Betätigungshebels 22 erfolgt.

Wie in Fig. 7 und Fig. 2 dargestellt, ist eine erste Anschlagfläche 134 für eine maximale Griffweite, also einen maximalen Abstand des Griffarms 26 von dem Lenker 12 vorgesehen und an dieser ist der Anschlagarm 66 dann anlegbar, wenn das Einstellelement 132 in einer ersten Stellung steht, in welcher dieses einen maximalen Abstand von der Schwenkachse 24 aufweist, so dass der Anschlagarm 66 an der der Schwenkachse 24 nächstliegenden ersten Anschlagfläche 134 aufliegt.

Diese erste Anschlagfläche 134 ist daher so angeordnet, dass sie eine Ausgangsstellung des Griffarms 26 zulässt, die bezogen auf die Schwenkachse 24 einen maximalen Winkelabstand W1 von der Halteeinheit 14 aufweist, wie in Fig. 2 dargestellt.

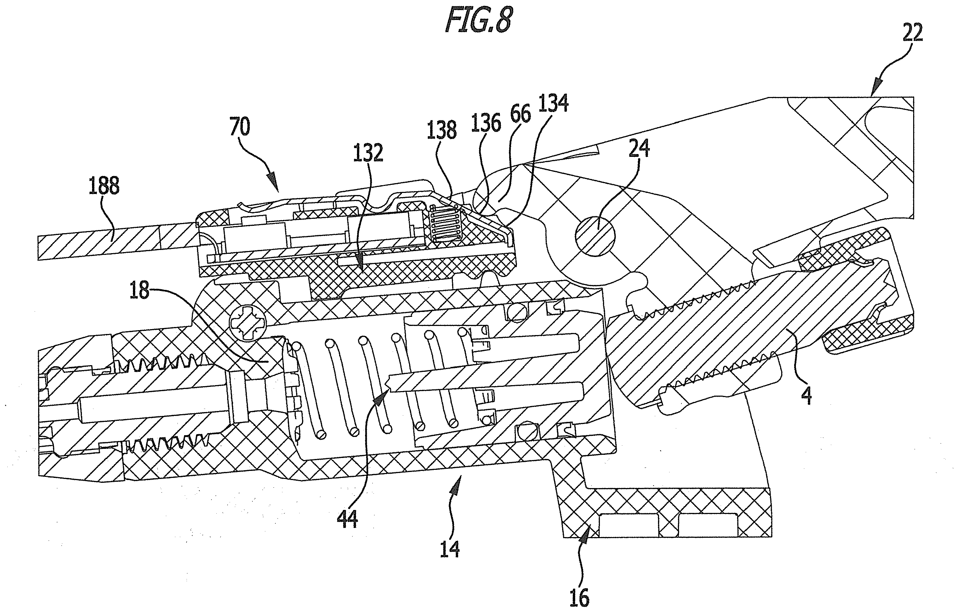

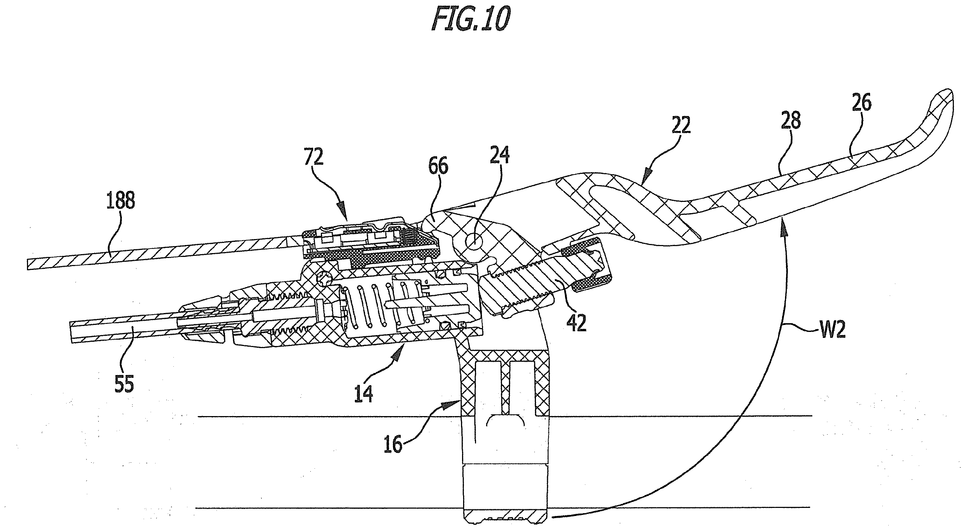

Die zweite Anschlagfläche 136 ist dann wirksam, wenn das Einstellelement 132 ausgehend von der ersten in den Fig. 7 und 2 dargestellten Stellung, in eine zweite, in Fig. 8 und 10 dargestellte und näher an der Schwenkachse 24 liegende Stellung verschoben ist, so dass der Anschlagarm 66 auf dieser zweiten Anschlagfläche 136 aufliegt, wobei diese so angeordnet ist, dass dann, wenn der Anschlagarm 66 auf dieser aufliegt, der Griffarm 26 von der Halteeinheit 16 einen Winkelabstand W2 aufweist, der kleiner ist, als der Winkelabstand W1.

Um die dritte Anschlagfläche 138 in ihre aktive Stellung zu bewegen, ist das Einstellelement 132 soweit in Richtung der Schwenkachse 24 zu verschieben, dass dies die der Schwenkachse 24 nächstliegende Stellung einnimmt.

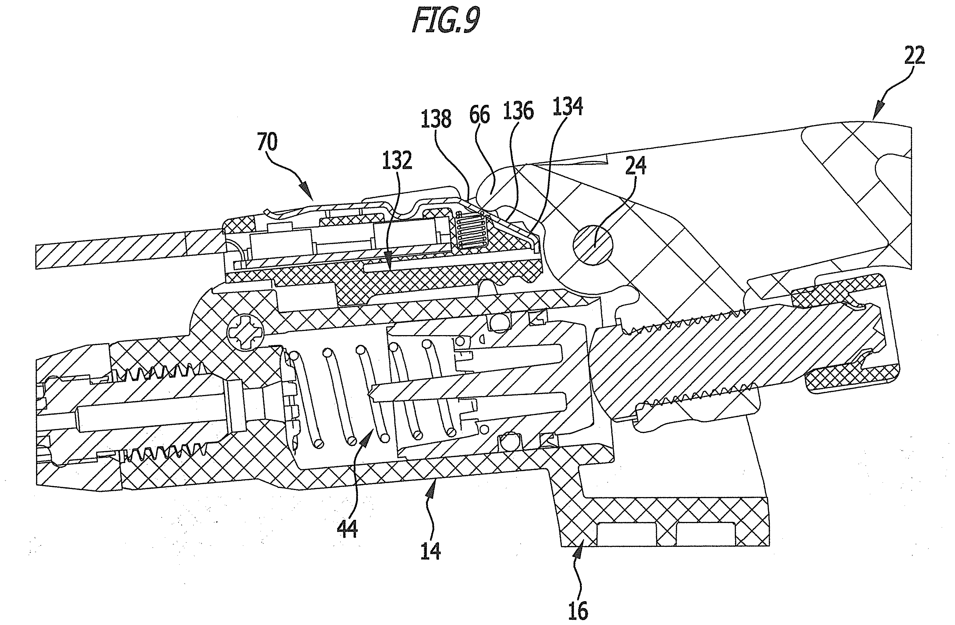

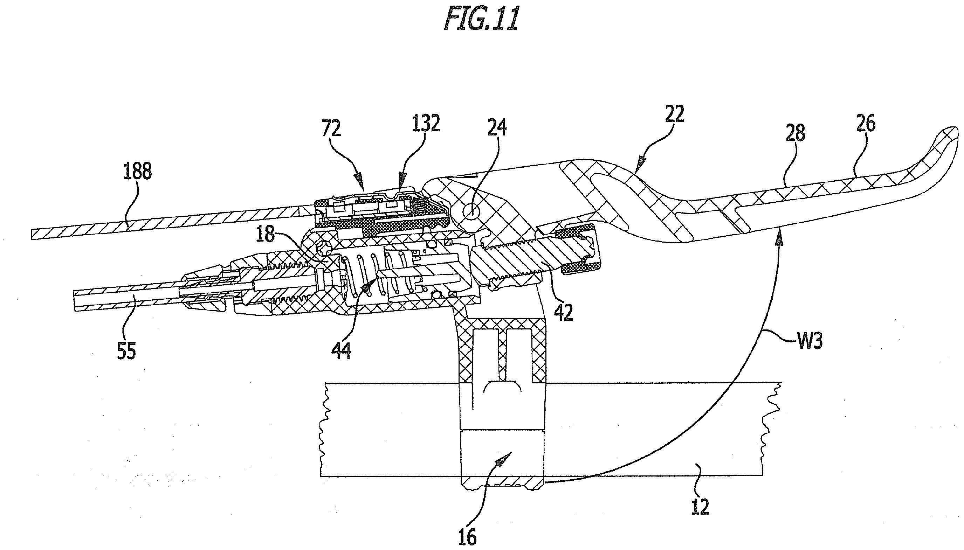

Die dritte Anschlagfläche 138 ist dabei so angeordnet, dass der Winkelabstand W3 zwischen dem Griffarm 26 und der Halteeinheit 16 kleiner ist als der Winkelabstand W2 (Fig. 9 und 11).

Um das Einstellelement 132 in den den verschiedenen Winkelabständen W1, W2, W3 entsprechenden verschiedenen Stellungen, in denen die verschiedenen Anschlagflächen 134, 136 und 138 wirksam sind, sicher positionieren zu können, ist das Einstellelement 132 mit einer als Ganzes mit 152 bezeichneten Rasteinrichtung relativ zum Gehäusekörper 18 verrastbar, welche in Fig. 12 bis 16 dargestellt ist.

Die Rasteinrichtung 152 umfasst dabei ein erstes, beispielsweise mit dem Gehäusekörper 18 verbundenes Rastelement 154, welches als Nocken oder als Stift ausgebildet sein kann und ein zweites Rastelement 156, welches mehrere Rastflächen 162, 164 und 166 aufweist, mit denen das erste Rastelement 154 zusammenwirken kann, um das Einstellelement 132 in den verschiedenen Stellungen, beispielsweise den Winkelabständen W1, bzw. W2, bzw. W3 entsprechenden Stellungen, relativ zum Gehäusekörper 18 festzulegen.

Vorzugsweise ist dabei das zweite Rastelement 156 als an das Einstellelement 132 angeformte federnde Zunge 168 ausgebildet.

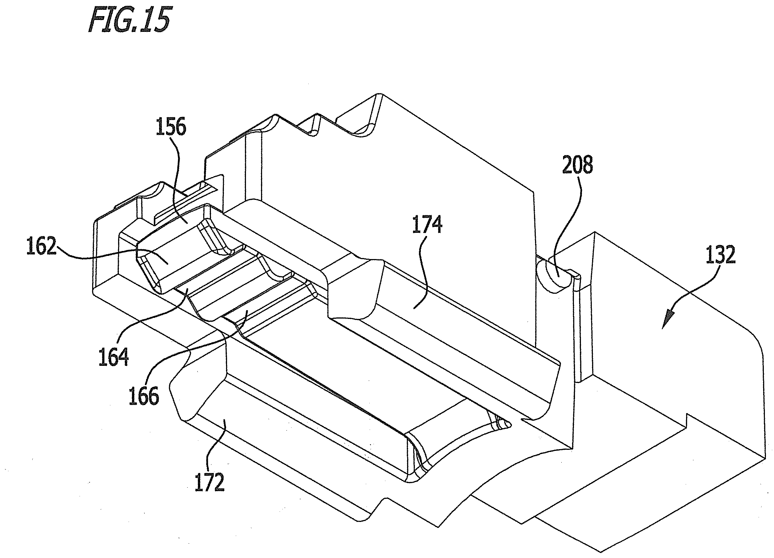

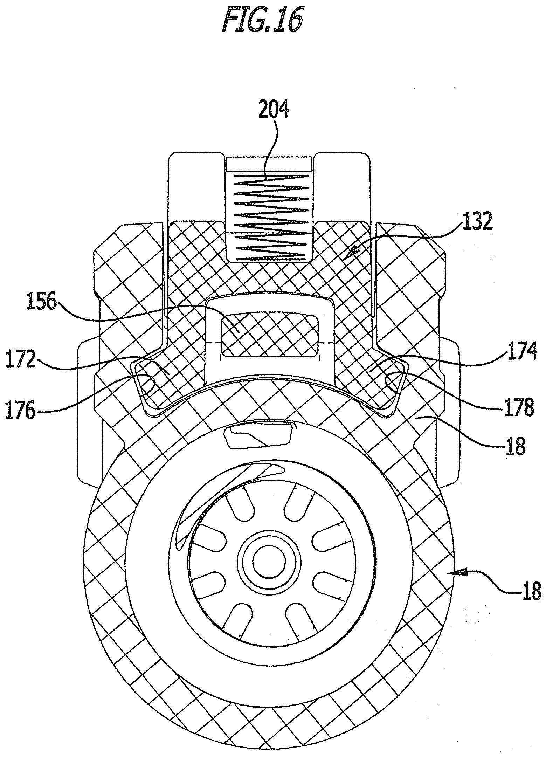

Zur Führung des Einstellelements 132 in dem Gehäusekörper sind, wie in den Fig. 15 und 16 dargestellt, seitlich am Einstellelement 132 liegende Führungskörper 172 und 174 vorgesehen, welche in entsprechende Führungsnuten 176 und 178 des Gehäusekörpers 18 eingreifen und somit das Einstellelement 132 in der Verschieberichtung 142 verschiebbar zwischen den verschiedenen durch die Rasteinrichtung 152 festlegbaren Stellungen führen.

Dem Einstellelement 132 ist ferner eine als Ganzes mit 182 bezeichnete Detektoreinheit zugeordnet, welche in einer Ausnehmung 184 des Einstellelements 132 angeordnet ist.

Die Detektoreinheit 182 umfasst einen Detektorträger 186, auf welchem zwei Detektoren 192 und 194 im Abstand voneinander angeordnet sind.

Die Detektoreinheit 182 erzeugt entsprechend einer Einwirkung auf die Detektoren 192 und 194 elektrisch erfassbare Zustandssignale, die beispielsweise über eine Detektorleitung 188 abgefragt werden können.

Jeder der Detektoren 192 und 194 ist mit einem taktil betätigbaren Element 196, 198 versehen, auf welches eine Einwirkung über ein Übertragungselement 202 erfolgt.

Das Übertragungselement 202 ist beispielsweise als Wippe 204 ausgebildet, welche um eine Schwenkachse 206 schwenkbar ist, wobei die Schwenkachse 206, wie beispielsweise in Fig. 15 dargestellt, durch beiderseits an das Einstellelement 132 angeformte Fortsätze 208 gebildet ist, die jeweils in eine Ausnehmung 212 einer Seitenwange der Wippe 204 eingreifen, wobei beiderseits der Wippe 204 derartige Seitenwangen 214 mit Ausnehmungen 212 angeordnet sind.

Vorzugsweise liegt dabei die Schwenkachse 206 der Wippe 204 zwischen den beiden Detektoren 192 und 194.

Die Wippe 204 umfasst ferner zwei gewölbte Einwirkungsflächen 216, 218, wobei die Einwirkungsfläche 216 auf das taktil betätigbare Element 196 wirkt, während die Einwirkungsfläche 218 auf das taktil betätigbare Element 198 einwirkt.

Die Wippe 204 ist ferner relativ zu den Detektoren 192 und 194 derart angeordnet, dass diese entweder mit der Einwirkungsfläche 216 auf das taktil betätigbare Element 196 oder mit der Einwirkungsfläche 218 auf das taktil betätigbare Element 198 jeweils so einwirkt, dass durch den jeweiligen Detektor 192 bzw. 194 ein Betätigungs-Zustandssignal generiert wird.

Ferner ist die Wippe 204 mit einer Zunge 222 versehen, die sich entlang des Einstellelements 132 im Bereich der Anschlagflächen 134, 136, 138 so erstreckt, dass bei dem auf eine der Anschlagflächen 134, 136 oder 138 einwirkenden Anschlagarm 66 ein Einwirken auf die Zunge 222 und somit eine Einwirkung auf die Wippe 204 erfolgt, und zwar derart, dass diese derart auf das taktile Element 196 einwirkt, so dass der Detektor 192 ein Betätigungs-Zustandssignal generiert.

Dieses Einwirken auf die Zunge 222 der Wippe 204 führt gleichzeitig dazu, dass, wie beispielsweise in Fig. 12 dargestellt, beispielsweise keine Einwirkung auf das taktile Element 198 zur Erzeugung des Betätigungs-Zustandssignals erfolgt.

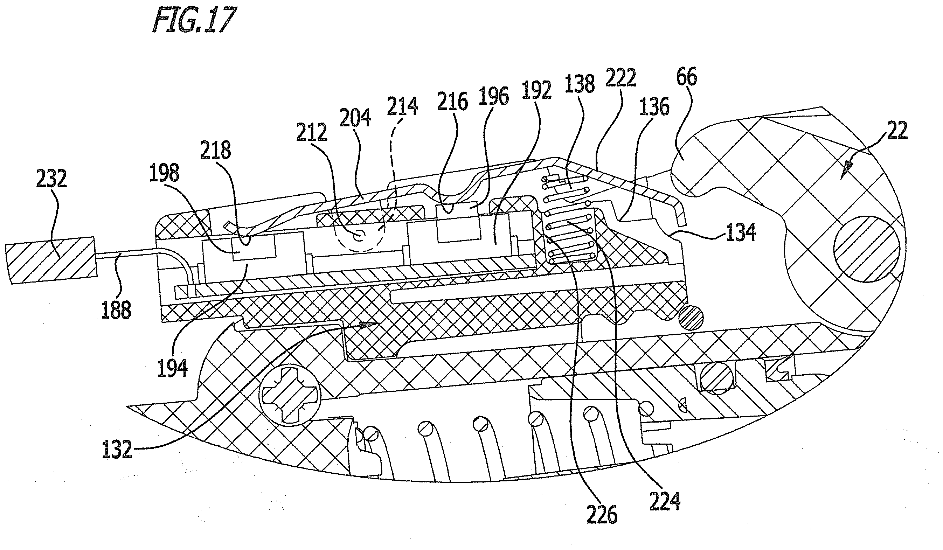

Erfolgt dagegen, wie in Fig. 17 dargestellt, eine Betätigung des Betätigungshebels 222, so hebt der Anschlagarm 66 von der entsprechenden Anschlagfläche 134, 136, 138 des Einstellelements 132 ab und wirkt somit nicht mehr auf die Zunge 222 ein.

Für diesen Fall ist der Wippe 204 ein Federelement 224 zugeordnet, welches beispielsweise in einer Aufnahme 226 des Einstellelements 132 angeordnet ist und beispielsweise auf die Zunge 222 in einer Richtung entgegengesetzt zur Einwirkungsrichtung des Anschlagarms 66 einwirkt, so dass dann, wenn der Anschlagarm 66, wie in Fig. 17 dargestellt, nicht mehr auf die Zunge 222 einwirkt, die Zunge 222 sich in Richtung des Anschlagarms 66 bewegt und somit die Wippe mit der Einwirkungsfläche 218 auf das taktil betätigbare Element 198 des Detektors 194 einwirkt, der somit ein Betätigungs-Zustandssignal erzeugt, während die Einwirkungsfläche 216 nicht mehr auf das taktil betätigbare Element 196 des Detektors 192 einwirkt, so dass dieser nicht mehr das Betätigungs-Zustandssignal erzeugt.

Bei der erfindungsgemäßen Lösung können die Detektoren 192 und 194 in unterschiedlichster Art und Weise ausgebildet sein.

Beispielsweise könnten die Detektoren als kapazitive Sensoren ausgebildet sein.

Eine besonders einfache und robuste Lösung sieht jedoch vor, dass die Detektoren 192, 194 als elektrische Schaltkontakte ausgebildet sind, wobei die taktil betätigbaren Elemente 196 und 198 die elektrischen Schaltkontakte entweder schließen oder öffnen, das heißt in der Lage sind, zur Erzeugung des Betätigungs-Zustandssignals einen definierten elektrischen Schaltzustand, nämlich offen oder geschlossen, zu erzeugen.

Erfolgt keine Betätigung des jeweiligen Elements 196 und 198 so liegt der jeweils andere Schaltzustand vor, dem ein Nichtbetätigungszustandssignal zugeordnet werden kann.

Diese den Schaltzuständen der Detektoren 192 und 194 entsprechenden Zustandssignale werden von einer externen Funktionseinheit 232 abgefragt. Die Tatsache, dass zwei Detektoren 192, 194 vorgesehen sind, die durch die Schaltwippe 204 derart betätigbar sind, dass stets nur einer der Detektoren 192, 194 das Betätigungssignal erzeugt, während der andere der Detektoren 194, 192 kein Betätigungssignal erzeugt, lässt sich in unterschiedlichster Art und Weise ausnützen.

Beispielsweise können die Detektoren 192 und 194 so mit externen Funktionseinheiten 232 verschaltet sein, dass unterschiedlichen externen Funktionseinheiten 232 die Betätigungssignale der Detektoren 192, 194 übermittelt werden.

Die Detektoren 192 und 194 können aber auch als redundante Detektoren geschaltet sein, so dass die externe Funktionseinheit 232 stets in der Lage ist zu überprüfen, ob eine Fehlfunktion eines der Detektoren192, 194 vorliegt oder ob beide Detektoren 192, 194 zuverlässig arbeiten, nämlich dadurch, dass stets eine Überprüfung erfolgt, ob das Betätigungs-Zustandssignal des einen der Detektoren 192, 194 mit dem Nichtbetätigungszustandssignal des anderen der Detektoren 194, 192 korrespondierend vorliegt.

Als externe Funktionseinheiten 232 sind beispielsweise Antriebsabschaltungen vorgesehen, insbesondere dann, wenn die erfindungsgemäße Gebereinheit dazu eingesetzt wird, eine Bremseinheit als Nehmereinheit zu betätigen.

Somit kann stets bei Betätigen der Bremseinheit sichergestellt werden, dass eine Antriebsabschaltung erfolgt und somit der Antrieb des lenkergeführten Fahrzeugs nicht gegen die Wirkung der Bremse arbeitet.

Alternativ oder ergänzend dazu kann jedoch die Funktionseinheit 232 aber auch als Ansteuerung eines Rekuperators zur Energierückgewinnung vorgesehen sein.

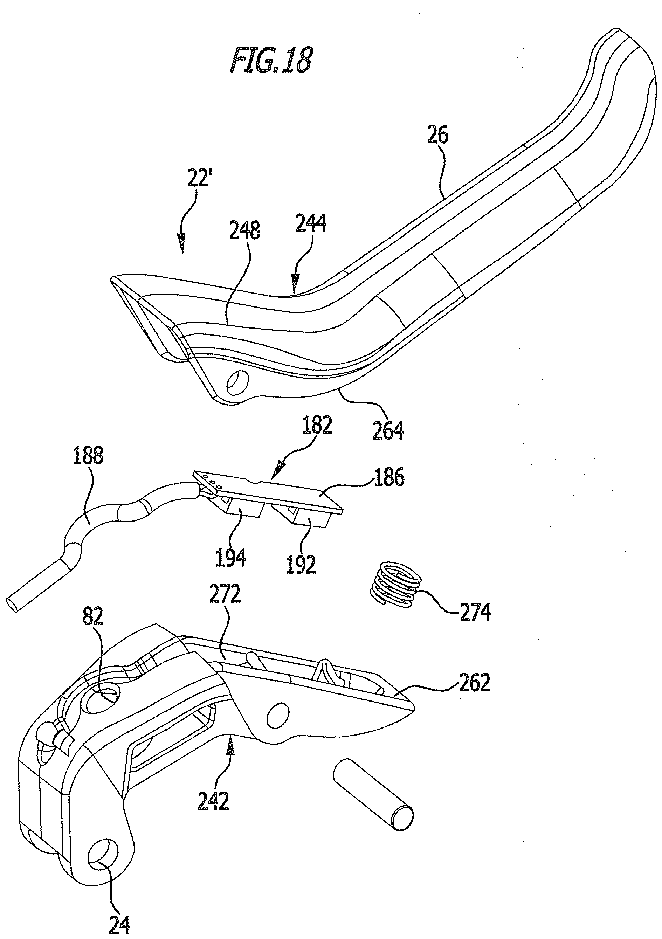

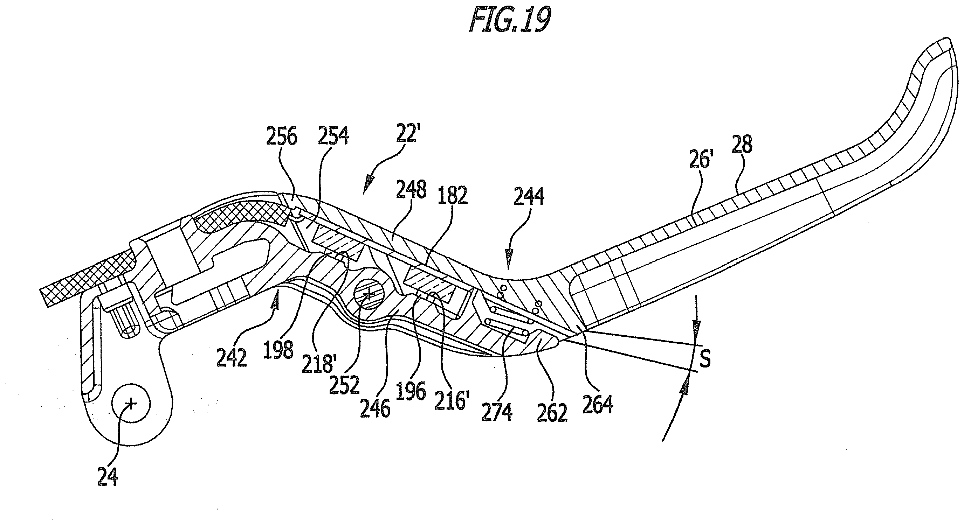

Bei einem zweiten Ausführungsbeispiel einer erfindungsgemäßen Gebereinheit 10 ist, wie in Fig. 18 und 19 dargestellt, die Detektoreinheit 182 in den Betätigungshebel 22' integriert, der ebenfalls ein Betätigungshebel 22' einer Gebereinheit 10 ist, die im Übrigen beispielsweise der Gebereinheit des ersten Ausführungsbeispiels entspricht.

Bei dem zweiten Ausführungsbeispiel sind all diejenigen Elemente, die mit dem ersten Ausführungsbeispiel identisch sind, mit denselben Bezugszeichen versehen, so dass auf die Ausführungen zu diesem Ausführungsbeispiel Bezug genommen wird.

Bei dem zweiten Ausführungsbeispiel weist der Betätigungshebel 22', wie insbesondere in Fig. 18 dargestellt, einen um die Schwenkachse 24 schwenkbaren ersten Hebelarm 242 auf sowie einen zweiten, den Griffarm 26 bildenden Hebelarm 244.

Die Hebelarme 242 und 244 weisen dabei einander zugewandte Armabschnitte 246, 248 auf, die relativ zueinander ebenfalls um eine Schwenkachse 252 relativ schwenkbar zueinander gelagert sind.

Geht man davon aus, dass der Betätigungshebel 22' in seiner beispielsweise im Zusammenhang mit dem ersten Ausführungsbeispiel erläuterten Ausgangsstellung steht, so ist der erste Hebelarm 242 in der Ausgangsstellung definiert angeordnet und der zweite Hebelarm 244 ist relativ zum ersten Hebelarm um die Schwenkachse 252, wie insbesondere in Fig. 19 dargestellt, um einen begrenzten Schwenkwinkel S schwenkbar, wobei der Schwenkwinkel S einerseits dadurch begrenzt ist, dass die Armabschnitte 246 und 248 beispielsweise in der unbetätigten Stellung des Betätigungshebels 22' mit ersten Seitenbereichen 254 und 256 aneinander anliegen und in der betätigten Stellung mit zweiten Seitenbereichen 262 und 264 aneinander anliegen, so dass durch die aneinander anlegbaren Seitenbereiche 254 und 256 sowie 262 und 264 der begrenzte Schwenkwinkels festgelegt ist.

Bei dem zweiten Ausführungsbeispiel ist die gesamte Detektoreinheit 182 mit dem Detektorträger 186 und den beiden Detektoren 192 und 194 an einem der Hebelarme 242, 244, beispielsweise am Armabschnitt 248 des zweiten Hebelarms 244, gehalten und ragt mit den Detektoren 192 und 194 in eine Ausnehmung 272 im Armabschnitt 296 hinein, wobei bodenseitig der Ausnehmung Einwirkungsflächen 216' und 218' vorgesehen sind, die auf die taktil betätigbaren Elemente 196 und 198 einwirken.

In diesem Fall bildet der erste Armabschnitt 246 des ersten Hebelarms 242 eine Wippe, die relativ zu der Detektoreinheit 182, die fest am zweiten Armabschnitt 248 gehalten ist, um die Schwenkachse 252 verschwenkbar ist und somit auf die taktil betätigbaren Elemente 196, 198 einwirkt und zwar ebenfalls, wie im Zusammenhang mit dem ersten Ausführungsbeispiel beschrieben, alternierend, so dass entweder in einem der Detektoren 192, 194 das Betätigungs-Zustandssignal erzeugt wird, während im anderen der Detektoren 194, 192 kein Betätigungs-Zustandssignal oder ein Nichtbetätigungszustandssignal erzeugt wird.

Ferner ist zwischen den Armabschnitten 246 und 248 ein Federelement 274 wirksam, welches die Armabschnitte 246 und 248 relativ so zueinander beaufschlagt, dass diese beispielsweise mit den Seitenbereichen 254 und 256 stets aneinander anliegen, wenn in einer Betätigungsausgangsstellung keine Betätigung des Griffhebels 26' erfolgt. Bei einer Betätigung des Griffhebels 26' bewegt sich somit der zweite Hebelarm 244 um die Schwenkachse 252 relativ zum ersten Hebelarm 242 und somit auch der zweite Armabschnitt 248 relativ zum ersten Armabschnitt 246 entgegen der Kraftwirkung des Federelements 274, so dass in einer Betätigungsstellung die Seitenbereiche 262 und 264 aneinander zur Anlage kommen.

Dies führt zu einer Einwirkung auf die Detektoreinheit 182 dergestalt, dass in diesem Fall beispielsweise der Detektor 192 von dem nichtbetätigten Zustand in den betätigten Zustand übergeht, während der Detektor 194 von dem betätigten Zustand in den nichtbetätigten Zustand übergeht und die entsprechenden Zustands-Signale erzeugt.

Erst wenn die Seitenbereiche 262 und 264 der Armabschnitte 246, 248 aufeinander aufliegen erfolgt bei weiterer Einwirkung auf den Griffhebel 26' ein Verschwenken des Betätigungshebels 22' in der Betätigungsrichtung 32 und somit ein Bewegen des gesamten Betätigungshebels 22' von der Ausgangsstellung in eine betätigte Stellung.

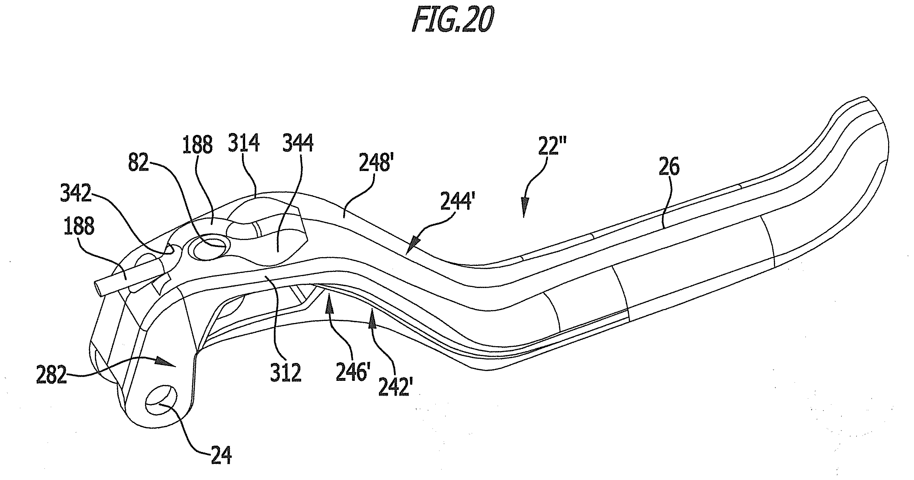

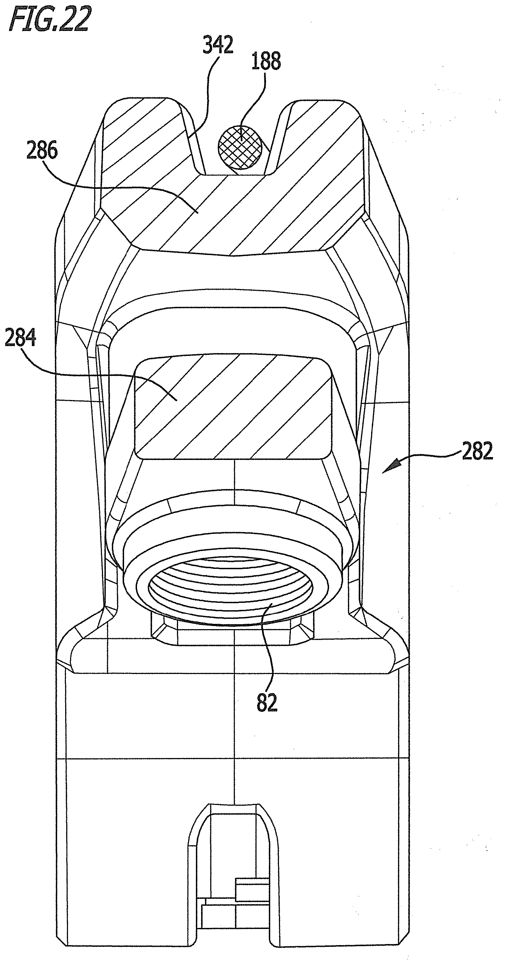

Bei einem dritten Ausführungsbeispiel einer Gebereinheit 10 ist, wie in den Fig. 20 bis 23 dargestellt, die Detektoreinheit 182 in den Betätigungshebel 22" integriert, der ebenfalls ein Betätigungshebel 22" der Gebereinheit 10 ist, die im Übrigen beispielsweise der Gebereinheit des ersten Ausführungsbeispiels entspricht.

Auch bei dem dritten Ausführungsbeispiel sind all diejenigen Elemente, die mit den voranstehenden Ausführungsbeispielen identisch sind, mit denselben Bezugszeichen versehen, so dass auf die Ausführungen zu diesen Ausführungsbeispielen Bezug genommen wird.

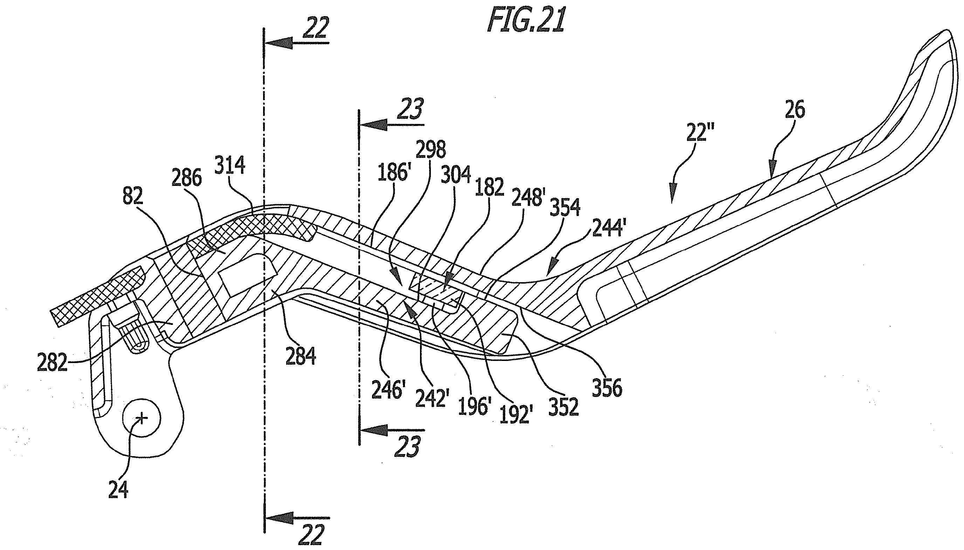

Bei dem dritten Ausführungsbeispiel weist der Betätigungshebel 22", wie in Fig. 21 dargestellt, einen um die Schwenkachse 24 schwenkbaren ersten Hebelarm 242', sowie einen zweiten, den Griffarm 26 umfassenden Hebelarm 244' auf.

Die Hebelarme 242' und 244' weisen einander zugewandte Armabschnitte 246' und 248' auf, die relativ zueinander bewegbar sind, wobei die Bewegbarkeit nicht aus einem Gelenk resultiert, welches die relativ zueinander bewegbaren Armabschnitte 246' und 248' miteinander verbindet.

Vielmehr sind die Hebelarme 242' und 244' als einstückiges Teil hergestellt. Wie beispielsweise in Fig. 20 und Fig. 21 dargestellt, umfasst der Betätigungshebel 22" eine um die Schwenkachse 24 verschwenkbare Hebelbasis 282, in welcher beispielsweise das Innengewinde 82 für eine Gewindeführung eines zeichnerisch nicht dargestellten Stößels vorgesehen ist.

Die Hebelbasis 282 geht dabei unmittelbar in den ersten Hebelarm 242' über, der über zwei Stegbereiche 284 und 286 mit der Hebelbasis 282 einstückig verbunden ist und aufgrund der beiden Stegbereiche 284 und 286 mit der Hebelbasis 282 eine starre Einheit bildet.

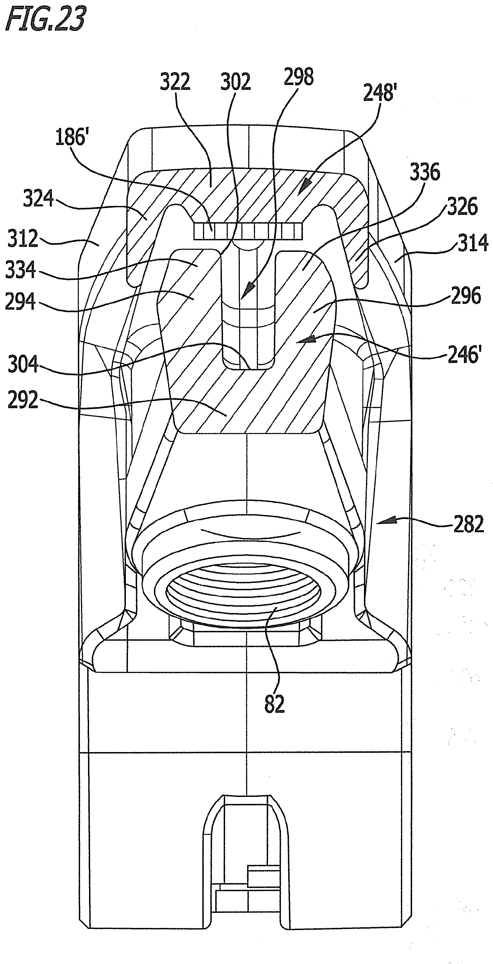

Die beiden Stegbereiche 284 und 286 gehen, wie in Fig. 23 dargestellt, in den Armabschnitt 246' über, der eine, wie in Fig. 23 dargestellt, im Querschnitt U-förmige Querschnittsform aufweist, wobei ein Mittelsteg 292 vorhanden ist, an welchen sich zwei Seitenstege 294 und 296 anschließen, die zwischen sich eine Nut 298 einschließen.

Die beiden Seitenstege 294 und 296 erstrecken sich dabei ausgehend von dem Mittelsteg 292 in Richtung des Armabschnitts 248', so dass die Nut 298 eine dem Armabschnitt 248' zugewandte Nutöffnung 302 aufweist, wobei in der Nut 298 der Nutöffnung 302 gegenüberliegend ein Nutgrund 304 ausgebildet ist.

Der zweite Hebelarm 244' ist ebenfalls an der Hebelbasis 282 gehalten, und zwar erstrecken sich von der Hebelbasis 282 ausgehend äußere elastische Streben 312 und 314 zu dem Armabschnitt 248', der im unbetätigten Zustand im Abstand zu den Seitenstegen 294 und 296 des Armabschnitts 246' und somit auch im Abstand von der Nutöffnung 302 verläuft.

Der Armabschnitt 248' umfasst beispielsweise ebenfalls einen Mittelsteg 322, an welchen sich stabilisierende Seitenstege 324 und 326 anschließen, die sich beispielsweise in Richtung des Armabschnitts 246' erstrecken und den Armabschnitt 246' mit seinen oberen Endbereichen 334 und 336 zwischen sich aufnehmen.

Ferner trägt der Mittelsteg 322 auf seiner dem Armabschnitt 246' zugewandten Seite den Detektorträger 186', auf welchem beispielsweise ein Detektor 192' sitzt, der so angeordnet ist, dass dieser, obwohl er vom Detektorträger 186' gehalten ist, durch die Nutöffnung 302 in die Nut 298 hineinragt und sich mit seinem taktil betätigbaren Element 196 an dem Nutgrund 304 dann abstützt, wenn der Armabschnitt 248' sich aufgrund des elastischen Verhaltens der Streben 312 und 314 in Richtung des Armabschnitts 246' bewegt, was dann erfolgt, wenn ein manuelles Einwirken auf den Griffarm 26 zum Betätigen des Betätigungshebels 22" erfolgt.

Vorzugsweise ist die Hebelbasis 282 zur Führung der Detektorleitung 188 auf einer der Schwenkachse 24 abgewandten Seite mit einer Vertiefung 342 versehen, welche die Detektorleitung 188 um das Innengewinde 82 herumführt und dann in einen Freiraum 344 übergeht, der zwischen den elastischen Streben 312 und 314 ausgebildet ist, diese voneinander getrennt hält und außerdem eine Trennung zwischen dem Armabschnitt 248' und dem Armabschnitt 246' schafft, um den Armabschnitt 248' des zweiten Hebelarms 244' ausschließlich über die Streben 312 und 314 mit der Hebelbasis 282 zu verbinden, über welche dann wiederum eine einstückige Verbindung zu dem ersten Hebelarm 242' zustande kommt.

Ferner ist der Freiraum 344 so bemessen, dass über diesen der Detektorträger 186' mit dem Detektor 192' zwischen den Armabschnitt 246' und den Armabschnitt 248' einführbar ist, wobei der Detektor 192' durch die Nutöffnung 302 in die Nut 298 eingreift und längs dieser mitsamt dem Detektorträger 186' in eine in Fig. 21 dargestellte Funktionsposition verschiebbar ist, die einen ausreichend großen Abstand von den elastischen Streben 312 und 314 aufweist, wobei beispielsweise diese Position des Detektors 192' durch die Ausdehnung der Nut 298, in Richtung von den elastischen Streben 312 und 314 weg, vorgegeben ist.

Sobald nun bei dem dritten Ausführungsbeispiel ein manuelles Einwirken auf den Griffarm 26 erfolgt, wirkt dieser auf den starr mit diesem verbundenen Armabschnitt 248' des Hebelarms 244' und somit bewegt sich der Armabschnitt 248' durch die elastischen Streben 312 und 314 relativ zum in seiner Ausgangsstellung stehendem Armabschnitt 246' des zweiten Hebels 242', welcher aufgrund der Ausgangsstellung, vorgegeben durch die Gebereinheit stehen bleibt.

Dadurch wird der Detektor 192' tiefer in die Nut 298 hinein bewegt, so dass das taktil betätigbare Element 198 auf dem Nutgrund 304 aufsteht und damit den Detektor 192' von dem unbetätigten Zustand in den betätigten Zustand überführt.

Um den Detektor 192' zu schützen, ist der erste Armabschnitt 246' an einem den elastischen Streben 312 und 314 abgewandten Endbereich 352 mit einer Stützfläche 354 versehen, auf welcher der Armabschnitt 248' mit einer Anlagefläche 356 im betätigten Zustand des Detektors 192' aufliegt, so dass die eigentliche Kraft zur Betätigung der Gebereinheit von dem Armabschnitt 248' über die Anlagefläche 356 und die Stützfläche 354 auf den Armabschnitt 246' übertragen werden kann, um die Gebereinheit selbst zu betätigen.

Sobald die Einwirkung auf den Griffbereich 26 beendet wird, bewegt sich der Armabschnitt 246' aufgrund der Tendenz der elastischen Streben 312 und 314, in ihren Ausgangszustand überzugehen, wiederum von dem Armabschnitt 246' weg, so dass damit auch der Detektor 192' wiederum von dem Nutgrund 304 wegbewegt wird und eine Betätigung des taktil betätigbaren Elements 196' beendet wird.

## Patentansprüche

1. Handbetätigte Gebereinheit (10) für Fahrzeuge, insbesondere für lenkergeführte Fahrzeuge, umfassend ein Gehäuse (14), einen relativ zu dem Gehäuse (14) bewegbaren Betätigungshebel (22), welcher derart mit einem Übertragungselement (44) gekoppelt ist, dass eine Betätigung des Betätigungshebels (22) mittels des Übertragungselements (44) auf eine Nehmereinheit übertragen wird, wobei der Gebereinheit (10) eine Detektoreinheit (182) zugeordnet ist, welche mit mindestens einem Detektor (192, 194) einen Übergang des Betätigungshebels (22) von einem unbetätigten Zustand in einen betätigten Zustand und umgekehrt erfasst,
**dadurch gekennzeichnet, dass** der mindestens eine Detektor (192, 194) einer an dem Gehäuse (14) angeordneten Griffweitenverstelleinrichtung (72) für den Betätigungshebel (22) zugeordnet ist.

2. Gebereinheit nach Anspruch 1, **dadurch gekennzeichnet, dass** die Detektoreinheit (182) einen Detektorausgang aufweist, an welchem für eine externe Funktionseinheit ein elektrisch erfassbares Zustandssignal zur Abfrage zur Verfügung steht.

3. Gebereinheit nach Anspruch 1 oder 2, **dadurch gekennzeichnet, dass** die Detektoreinheit (182) den jeweils erfassten Zustand des Betätigungshebels (22) in einen das Zustandssignal bildenden elektrischen Schaltzustand umsetzt.

4. Gebereinheit nach einem der voranstehenden Ansprüche, **dadurch gekennzeichnet, dass** der Betätigungshebel (22) über ein Übertragungselement (204) auf den mindestens einen Detektor (192, 194) einwirkt.

5. Gebereinheit nach einem der voranstehenden Ansprüche, **dadurch gekennzeichnet, dass** die Detektoreinheit (182) mindestens zwei Detektoren (192, 194) umfasst und dass insbesondere die Detektoreinheit (182) eine eine Einwirkung auf die Detektoren (192, 194) übertragende Wippe (204, 246) umfasst, welche wechselweise auf jeweils einen der Detektoren (192, 194) einwirkt.

6. Gebereinheit nach einem der voranstehenden Ansprüche, **dadurch gekennzeichnet, dass** der mindestens eine Detektor (192, 194) so an dem Gehäuse (14) der Gebereinheit (10) angeordnet ist, dass auf diesen der Betätigungshebel (22) in der betätigten oder in der unbetätigten Stellung einwirkt.

7. Gebereinheit nach einem der voranstehenden Ansprüche, **dadurch gekennzeichnet, dass** der mindestens eine Detektor (192, 194) einem Einstellelement (132) der Griffweitenverstelleinrichtung (72) zugeordnet ist.

8. Gebereinheit nach einem der voranstehenden Ansprüche, **dadurch gekennzeichnet, dass** auf den mindestens einen Detektor (192, 194) ein Anschlagarm (66) des Betätigungshebels (22) einwirkt.

9. Gebereinheit nach einem der voranstehenden Ansprüche, **dadurch gekennzeichnet, dass** der mindestens eine Detektor (192, 194) an dem Betätigungshebel (22) angeordnet ist.

10. Gebereinheit nach Anspruch 9, **dadurch gekennzeichnet, dass** der Betätigungshebel (22) einen ersten Hebelarm (242) und einen zweiten Hebelarm (244) umfasst und dass die Hebelarme (242, 244) relativ zueinander zwischen einer in einem unbetätigten Zustand des Betätigungshebels (22) vorliegenden Betätigungsausgangsstellung und einer in einem betätigten Zustand vorliegenden Betätigungsstellung bewegbar sind.

11. Gebereinheit nach Anspruch 10, **dadurch gekennzeichnet, dass** die Hebelarme (242, 244) zwischen der Betätigungsausgangsstellung und der Betätigungsstellung relativ zueinander verschwenkbar sind.

12. Gebereinheit nach Anspruch 10, **dadurch gekennzeichnet, dass** die Hebelarme (242', 244') durch elastische Bereiche (312, 314) miteinander und relativ zueinander bewegbar verbunden sind.

13. Gebereinheit nach einem der Ansprüche 10 bis 12, **dadurch gekennzeichnet, dass** die Hebelarme (242, 244) einander zugewandt angeordnete Armabschnitte (246, 248) aufweisen und dass an einem Armabschnitt (248) der mindestens eine Detektor (192, 194) angeordnet ist, auf welchen der andere (246) der Armabschnitte (246, 248) in der Betätigungsausgangsstellung oder in der Betätigungsstellung einwirkt.

14. Gebereinheit nach Anspruch 13, **dadurch gekennzeichnet, dass** der mindestens eine Detektor (192, 194) mit einem (248) der Armabschnitte (246, 248) zusammenwirkend angeordnet ist und in den anderen (246) der Armabschnitte (246, 248) eingreift und dass insbesondere der mindestens eine Detektor (192, 194) in einer Aufnahme des einen (246) der Armabschnitte angeordnet ist und der andere (248) der Armabschnitte (246, 248) die Aufnahme übergreift.

## Claims

1. Hand-actuated transmitter unit (10) for vehicles, in particular for handlebar-controlled vehicles, comprising a housing (14), an actuating lever (22) which is movable relative to the housing (14) and is coupled to a transmission element (44) such that an actuation of the actuating lever (22) is transmitted by means of the transmission element (44) to a slave unit,
wherein there is associated with the transmitter unit (10) is a detector unit (182) which detects with at least one detector (192, 194) a transition of the actuating lever (22) from a non-actuated state into an actuated state and vice versa,
**characterised in that** the at least one detector (192, 194) is associated with a reach adjust device (72) for the actuating lever (22), the reach adjust device (72) being arranged on the housing (14).

2. Transmitter unit according to claim 1, **characterised in that** the detector unit (182) has a detector output at which an electrically detectable state signal is available for request for an external functional unit.

3. Transmitter unit according to claim 1 or 2, **characterised in that** the detector unit (182) converts the respectively detected state of the actuating lever (22) into an electrical switching state forming the state signal.

4. Transmitter unit according to one of the preceding claims, **characterised in that** the actuating lever (22) influences the at least one detector (192, 194) by means of a transmission element (204).

5. Transmitter unit according to one of the preceding claims, **characterised in that** the detector unit (182) comprises at least two detectors (192, 194) and **in that** in particular the detector unit (182) comprises a rocker (204, 206) which transmits an influence to the detectors (192, 194) and which influences each of the detectors (192, 194) alternatingly.

6. Transmitter unit according to one of the preceding claims, **characterised in that** the at least one detector (192, 194) is arranged on the housing (14) of the transmitter unit (10) such that the actuating lever (22) influences said detector in the actuated or the non-actuated position.

7. Transmitter unit according to one of the preceding claims, **characterised in that** the at least one detector (192, 194) is associated with an adjustment element (132) of the reach adjust device (72).

8. Transmitter unit according to one of the preceding claims, **characterised in that** a contact arm (66) of the actuating lever (22) influences the at least one detector (192, 194).

9. Transmitter unit according to one of the preceding claims, **characterised in that** the at least one detector (192, 194) is arranged on the actuating lever (22).

10. Transmitter unit according to claim 9, **characterised in that** the actuating lever (22) comprises a first lever arm (242) and a second lever arm (244) and that the lever arms (242, 244) are movable relative to one another between an actuation starting position existing in a non-actuated state of the actuating lever (22) and an actuation position existing in an actuated state.

11. Transmitter unit according to claim 10, **characterised in that** the lever arms (242, 244) are pivotable relative to one another between the actuation starting position and the actuation position.

12. Transmitter unit according to claim 10, **characterised in that** the lever arms (242', 244') are connected to one another and are movable relative to one another by means of elastic regions (312, 314).

13. Transmitter unit according to one of the claims 10 to 12, **characterised in that** the lever arms (242, 244) have arm portions (246, 248) arranged facing one another and **in that** arranged on one arm portion (248) is the at least one detector (192, 194) which the other (246) of the arm portions (246, 248) influences in the actuation starting position or in the actuation position.

14. Transmitter unit according to claim 13, **characterised in that** the at least one detector (192, 194) is arranged cooperating with one (248) of the arm portions (246, 248) and engages in the other (246) of the arm portions (246, 248) and **in that** in particular the at least one detector (192, 194) is arranged in a receptacle of the one (246) of the arm portions and the other (248) of the arm portions (246, 248) overlaps the receptacle.

## Revendications

1. Transmetteur (10) manuel pour véhicules, en particulier pour véhicules à volant, comprenant un boîtier (14), un levier d'actionnement (22) mobile par rapport au boîtier (14), lequel levier est couplé à un élément de transmission (44) de manière à transmettre un actionnement du levier d'actionnement (22) à un récepteur, au moyen de l'élément de transmission (44), dans lequel est affecté au transmetteur (10) un module de détection (182), qui détecte, avec au moins un détecteur (192, 194), un passage du levier d'actionnement (22) depuis un état non actionné à un état actionné et inversement,
**caractérisé en ce que** l'au moins un détecteur (192, 194) est affecté à un dispositif d'ajustement de portée (72), disposé sur le boîtier (14), pour le levier d'actionnement (22).

2. Transmetteur selon la revendication 1, **caractérisé en ce que** le module de détection (182) présente une sortie de détecteur sur laquelle un signal d'état, détectable électriquement, destiné à la requête, est disponible pour un module fonctionnel externe.

3. Transmetteur selon la revendication 1 ou la revendication 2, **caractérisé en ce que** le module de détection (182) transforme l'état respectivement détecté du levier d'actionnement (22) en un état de commutation électrique formant le signal d'état.

4. Transmetteur selon l'une quelconque des revendications précédentes, **caractérisé en ce que** le levier d'actionnement (22) agit sur l'au moins un détecteur (192, 194) par l'intermédiaire d'un élément de transmission (204).

5. Transmetteur selon l'une quelconque des revendications précédentes, **caractérisé en ce que** le module de détection (182) comprend au moins deux détecteurs (192, 194), et **en ce qu'**en particulier, le module de détection (182) comprend un bouton à bascule (204, 246) transmettant une action sur les détecteurs (192, 194) et agissant alternativement sur respectivement l'un des détecteurs (192, 194).

6. Transmetteur selon l'une quelconque des revendications précédentes, **caractérisé en ce que** l'au moins un détecteur (192, 194) est disposé de telle sorte sur le boîtier (14) du transmetteur (10) que le levier d'actionnement (22) agit sur ledit détecteur dans la position actionnée ou dans la position non actionnée.

7. Transmetteur selon l'une quelconque des revendications précédentes, **caractérisé en ce que** l'au moins un détecteur (192, 194) est affecté à un élément de réglage (132) du dispositif d'ajustement de portée (72) .

8. Transmetteur selon l'une quelconque des revendications précédentes, **caractérisé en ce qu'**un bras de butée (66) du levier d'actionnement (22) agit sur l'au moins un détecteur (192, 194).

9. Transmetteur selon l'une quelconque des revendications précédentes, **caractérisé en ce que** l'au moins un détecteur (192, 194) est disposé sur le levier d'actionnement (22).

10. Transmetteur selon la revendication 9, **caractérisé en ce que** le levier d'actionnement (22) comprend un premier bras de levier (242) et un second bras de levier (244), et **en ce que** les bras de levier (242, 244) sont mobiles l'un par rapport à l'autre entre une position de départ d'actionnement de mise dans un état non actionné du levier d'actionnement (22) et une position d'actionnement de mise dans un état actionné.

11. Transmetteur selon la revendication 10, **caractérisé en ce que** les bras de levier (242, 244) peuvent basculer l'un par rapport à l'autre entre la position de départ d'actionnement et la position d'actionnement.

12. Transmetteur selon la revendication 10, **caractérisé en ce que** les bras de levier (242', 244') sont reliés ensemble et de façon mobile l'un par rapport à l'autre, par des zones élastiques (312, 314).

13. Transmetteur selon l'une quelconque des revendications 10 à 12, **caractérisé en ce que** les bras de levier (242, 244) présentent des tronçons de bras (246, 248), dirigés les uns vers les autres, et **en ce qu'**est disposé, sur un tronçon de bras (248), l'au moins un détecteur (192, 194) sur lequel agit l'autre (246) des tronçons de bras (246, 248) dans la position de départ d'actionnement ou dans la position d'actionnement.

14. Transmetteur selon la revendication 13, **caractérisé en ce que** l'au moins un détecteur (192, 194) interagit avec l'un (248) des tronçons de bras (246, 248) et entre en prise dans l'autre (246) des tronçons de bras (246, 248), et **en ce qu'**en particulier l'au moins un détecteur (192, 194) est disposé dans un logement de l'un (246) des tronçons de bras et l'autre (248) des tronçons de bras (246, 248) chevauche le logement.
